# EUROPEAN PATENT APPLICATION

(11) **EP 3 516 965 A1**
(43) Date of publication of application: **31.07.2019**
(21) Application number: 19162565.6
(22) Date of filing: 22.09.2015
(51) Int. Cl.: A23K 20/142, A23K 20/22, A23K 20/24, A23K 50/80

(54) **A FISH FEED AND METHOD FOR SMOLTIFICATION AND PREVENTION OF DESMOLTIFICATION IN SALMONIDAE, AND FOR PROPHYLAXIS AND TREATMENT OF HAEMORRHAGIC SMOLT SYNDROME (HSS) IN SALMONIDAE**

(30) Priority: 23.09.2014 US 201462053826 P
(62) Divisional of application: 15766520.9
(71) Applicant: Europharma AS, 8376 Leknes (NO)
(72) Inventor: NORDLY, Jim Roger, N-8372 Gravdal (NO); LYNGØY, Arthur, N-6013 Ålesund (NO); MANSILLA, Claudio Retamal, Puerto Varas (CL)
(74) Representative: Onsagers AS

(57) **Abstract**

A fish feed useful in a method for smoltification and prevention of desmoltification in Salmonidae, and for prophylaxis and treatment of haemorrhagic smolt syndrome (HSS) in Salmonidae. The feed contains protein, fat, carbohydrates, vitamins, minerals and water, and in addition comprises sodium salts (Na⁺) from 10 -100 g/kg by weight, polyvalent cation receptor modulator (PVCR) from 1-10 g/kg by weight, magnesium salts (Mg²⁺) from 0.1-100 g/kg by weight, and calcium salts (Ca²⁺) from 0.1-100 g/kg by weight.

## Description

### Field of the invention

The invention relates to fish farming, in particular to fish farming of Salmonidae, more particularly to a novel fish feed and method for smoltification and prevention of desmoltification in Salmonidae, and for prophylaxis and treatment of haemorrhagic smolt syndrome (HSS) in Salmonida

### Background of the invention

*Salmo sp., Onchorhynchus sp.* and *Salvelinus sp.* are strains within the family Salmonidae, which have an anadromous lifecycle. Anadromous lifecycle means the fish during its lifetime, stay in both freshwater and seawater. Salmonids in freshwater, which decide to migrate to seawater, undergo a physiological process called smoltification.

In nature, the smoltification process are steered by endogenous processes within the fish, and these are synchronize with external signals from the environment of the fish (examples are darkness, light, water temperature, etc.). Smolt is the name of a salmon fish in freshwater, ready for migration to seawater. The smoltification process includes several endocrine signal substances, as melatonin, releasing hormones from the pituitary gland, thyroid-stimulating hormone (TSH), prolactin (PRL), growth hormone (GH) and adrenocorticotropic hormone (ACTH). These substances have an impact on several target organs within the fish body (examples are the thyroid gland and adrenal glands), which secrete signal substances which again change the appearance, behavior, growth and metabolism, body composition and capacity to maintain osmotic balance in seawater.

In freshwater Salmonids pump ions (Cl⁻, Na⁺, K⁺ , Ca²⁺) from the surrounding into the body (example is through gills), reabsorb ions from the urine (examples are Ca²⁺, Mg²⁺), and simultaneously excrete strongly diluted urine, in order to handle a surplus of water in the body. When fish get adapted to seawater, this physiological activity has to turn into the opposite direction. Through the smoltification process, Salmonids become capable to pump salt out from the body (examples are Na⁺ and Cl⁻ through the gills), excrete surplus of ions through concentrated urine (examples are Ca²⁺, Mg²⁺), and reabsorb water from the urine in the kidney.

Farmed salmon, which in freshwater undergo smoltification, are observed from time to time with lethargic behavior, protuberant dermal scales, pale gills and numerous bleedings in internal organs, as heart- and skeletal muscle, liver and visceral fat tissue. The fish group might have moderate increased mortality. The condition described, are named *hemorrhagic smolt syndrome* (HSS). The cause of the disease, is not fully understood. The scientific literature suggest malnutrition, genetic disorder, as well as presence of virus particles in tissue, as possible explanations.

Smolt remaining in freshwater after the smoltification process is accomplished tend to develop loose dermal scales (loose scales). Loose scales is a challenge in handling and transport of the fish, as this easily give lesions in the skin. Such lesions can be an entrance for infections (examples are *Saprolegnia sp, Moritella viscosa, Tenacibaculum maritimum*), and cause ulcers and disturbed osmotic balance, in freshwater and seawater.

In case the fish remain in freshwater when it has reach smolt status, the smoltification process will reverse, and the fish will try to reestablish physiological balance, suitable for a life in freshwater. The process, which is called desmoltification, might be accompanied by reduced appetite, loose scales, and from time to time moderately increased mortality.

Use of traditional winter signal (photo manipulation with 12-hour light, 12-hour darkness a day) in production of salmon smolt, meet several challenges. Winter signal reduces daily feed uptake and growth with about 30 %. Winter signal is given for about 7 weeks, followed by summer signal (24 hour light a day) until smolt status has been achieved. Further, tanks with high density of fish (example > 70 kg/m³), as observed in hatcheries with intensive production conditions, lead to fish receiving different amount of summer signal, which again cause fish to smoltify at different time. Fish living on the bottom of deep tanks, with walls of dark colors, are more likely to receive unsufficient summer signal.

Too high biomass in tanks, might affect the water quality negatively (example is increased level of CO₂, > 15 mg/liter), if unsufficient water treatment or water exchange is not achieved. Poor water quality affect the smoltification process negatively.

Further, large fish smoltify before smaller fish, and similar for desmoltification. In hatcheries with intensive production conditions, it is a challenge to keep fish of approximately similar size in each tank, due to a limited number of tanks available. Thus, a fish group commonly holds fish of different size, and smoltification and desmoltification occur at different time within the group.

As the smoltification process proceeds, fish get more and more incapable to remain in freshwater, because the physiology of the fish is adapted to seawater. The manifestation of this can be moderately increased mortality within the fish group. At this stage in the production, it is common to find fish with HSS, as well as observations of reduced appetite and growth.

Overall, these conditions challenge both fresh water and seawater production. In fresh water production, decreased growth and some mortality, and for seawater production, transfer of smolt groups to seawater with inhomogeneous smolt status. This means that some fish in seawater either die of osmoregulation problems, or the fish may survive, but eat poorly and are more susceptible to prolonged stress, followed by secondary diseases. The average mortality rate in Norwegian salmon production, from transfer time to harvest, has for several years, been approximately 20%. Surveys conducted by the Norwegian Food Safety Authority (2013) shows that approximately 40% of this mortality rate, is due to the reduced smolt quality.

The organs which are included in the smoltification process (for example, pineal body, the hypothalamus, pituitary gland, kidney, intestine, gills and skin,) has on the external side of the cell wall a receptor type called Calcium Sensing Receptors (CaSR). CaSR may be affected by different modulators, including ions (such as Ca²⁺, Mg²⁺, Cl⁻, Na⁺, H⁺) and free amino acids (such as tryptophan). Stimulation of the CaSR provides an up regulation or down regulation of the variety of the cell's intracellular activity. A controlled stimulation of the CaSR can provide a response that corresponds to the smoltification process.

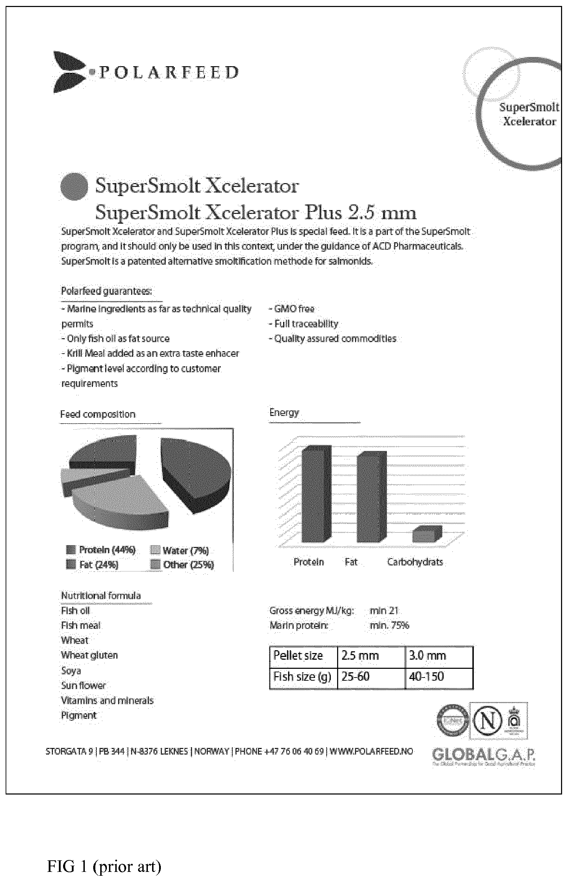

An example of such a controlled stimulation is the SuperSmolt ® method, in which ions are added to the operating water (Ca²⁺, Mg²⁺, Cl⁻), in combination with fish food containing added Na⁺-ions, Cl⁻-ions and tryptophan. The SuperSmolt ® method is described in the international patent application WO 02/30182, the contents of which is hereby "incorporated by reference", as if all of the text was written in this application. The term "fish food", as it is understood in connection with the SuperSmolt ® method, and as further used in the present application, is understood to mean a feed composed of protein, fats, carbohydrates, vitamins and minerals, intended for parr and smolt of salmonids in fresh water. A composition of such growth feed can contain these or parts of these raw materials. Persons skilled in the art are familiar with the types of feed that are intended for this purpose, versus feed that is intended for other species, or stages of growth. An example of fish feed used in the SuperSmolt® method is illustrated in the product sheet shown in Fig. 1.

The SuperSmolt ® method makes it possible to smoltify salmonids without use of winter- and summer-signal (dark/light), but rather with the use of continuously light (24 hour/day) right up to transfer time to seawater, thus, avoiding use of growth reducing winter signal. Furthermore, using this method allows keeping the fish in the smolt window, preventing desmoltification, which allows for normal growth also during the smoltification process in fresh water.

The SuperSmolt ® method provides overall obvious advantages in production efficiency, both in fresh water and seawater production. One can maintain normal growth in fresh water and seawater, transfer the smolt groups to the sea where fish have homogeneous smolt status, and thus reduce production losses due to mortality, appetites failure and increased risk of disease.

However, the SuperSmolt ® method has several disadvantages. That method requires the addition of large quantities of salts (ions) in the operation water, over a long period of time (3-6 weeks). This is a demanding practical issue and greatly increases cost in the production. Thus, the method is rarely used to keep fish in fresh water for a long period of time (< 6 weeks), as the costs and practical conditions makes it unsuitable.

### Summary of the invention

The present invention therefore has as its purpose according to one aspect to provide a fish food and a method that eliminates or reduces the disadvantages of the SuperSmolt ® method. This is performed by formulating a fish feed which alone is able to smoltify the fish without the use of salts in the process water and at the same time, allows keeping the fish in the smolt window for a long period of time. The invention provides a simplified smoltification process compared with the SuperSmolt ® , as there is no need to add salts in the process water, and it can easily be implemented as an additional stimulus to the use of winter and summer signals, or inadequate winter and summer signals, in the smoltification process. Furthermore, it will be likely that one can keep the salmon fish in fresh water without the fish desmoltifying, perishing or experiencing a low rate of growth, without the occurrence of hemorraghisk smoltsyndrom or loose scales in the skin, right up to harvest size (> 200 grams, most often 4-6 kg).

According to one aspect the invention provides a method where fish can be kept in fresh water until the harvest size.

According to one aspect, the invention provides a fish feed comprising of protein, fat, carbohydrate, vitamins, minerals and water, NaCl from 10 -100 g/kg, with added polyvalent cation receptor modulator (PVCR), for example, tryptophan or phenylalanin, 1-10 g/kg, further with added magnesium salts (Mg²⁺), such as MgCl₂ between 0.1-100 g/kg, and/or calcium salts (Ca²⁺), for example, the CaCl₂ between 0.1-100 g/kg.

### Brief Description of the drawings

Figure 1 is a product sheet of a prior art fish feed utilized in the SuperSmolt ® method.

### Detailed description of the invention

According to one aspect, the present invention provides a fish feed to which is added salts (ions) and PVCR modulators (free amino acids) according to the following table 1. All of the numerical ranges specified should be considered to include the various intermediate ranges as if these intermediate ranges were explicitly mentioned, e.g., a range of 1-10 should be considered to also include 1-9, 1-8, 1-7 (etc); 2-10, 3-10, 4-10 (etc); 1-9, 2-8, (etc).

**Table 1**

| **Free PVCR-modulator** | |
|---|---|
| Free aminoacid(s) | 1-10 g/kg feed |
| **Na⁺** | 3,934 - 39,340 g/kg feed |
| **Cl⁻** | 6,202 - 199,020 g/kg feed |
| **Ca²⁺** | 0,036 - 36,110 g/kg feed |
| **Mg²⁺** | 0,026 - 25,530 g/kg feed |

PVCR modulators include the free amino acids as here mentioned, whether used alone or in combination: Tryptophan, Tyrosine, Phenylalanine, Serine, Alanine, Arginine, Histidine, Leucine, Isoleucine, Aspartic acid, Glutamic acid, Glycine, Lysine, Methionine, Proline, Glutamine, Asparagine, Threonine, Valine, and Cysteine, in concentrations between 1-10 grams/kg fish feed.

According to another aspect, the fish feed may comprise various combinations of the above mentioned additional constituents. Non-limiting examples of such combinations are:
1. Na, Cl, Ca and Mg
2. Cl, Ca, Mg,
3. Ca, Mg,
4. Ca, Na, Cl
5. Ca, Na, Mg
6. Ca, Na
7. Ca, Cl
8. Ca
9. Mg, Na, Cl
10. Cl, Mg
11. Mg
12. free (s) amino acid (s), Na, Cl and Ca
13. free (s) amino acid (s), Na, Cl and Mg
14. free (s) amino acid (s), Na, Ca, Mg
15. free (s) amino acid (s), Na, Ca
16. free (s) amino acid (s), Na, Mg
17. free (s) amino acid (s), Cl, Ca, Mg
18. free (s) amino acid (s), Cl, Mg
19. free (s) amino acid (s), Cl, Ca
20. free (s) amino acid (s), Ca, Mg, Cl
21. free (s) amino acid (s), Ca, Mg
22. free (s) amino acid (s), Ca

"Fish food" is understood here as a feed composed of protein, fats, carbohydrates, vitamins, minerals, pigments and water, suitable for parr and smolt of salmonids in fresh water. A composition of such feed for growth can contain these or parts of these raw materials:

### Protein sources:

Soya protein concentrate (for example, SPC65), soya protein (for example, HiPro Soy), pea protein flour, sunflower flour, wheat gluten, corn gluten, horse beans/faba beans, raps meal, lupins, poultry meal, meat bone meal, blood meal, guargum flour, microbial proteins (from the fermentation of different substrates), algee protein, shell animal flour in general, krill flour, krill hydrolysate, fish hydrosylate, fish meal (ex from the NVG herring, mackerel, horse mackerel, sandeels, capelin, anchovetas, menhaden and more)

### Carbohydrate sources:

Wheat or other suitable carbohydrate source known in the art

### Fat sources:

Fish oil (ex from the NVG herring, mackerel, horse mackerel, sandeels, capelin, anchovetas, menhaden m. more), raps seed oil, lin seed seed oil

### Minerals and vitamins:

Added after the current nutritional advice for parr and smolt of salmonids in fresh water

### Pigments:

Astaxanthin or other pigments known in the art

One skilled in the art is familiar with such feed and the necessary composition, in order to be calculated to provide growth of parr and smolt of salmonids in fresh water.

The fish feed according to the invention, surprisingly enables:
- Producing smolt of anadromous salmonids for transfer to sea water (10-150 g)
- Maintaining the normal ion balance and osmoregulation for anadromous salmonids in fresh water, including but not limited to,
   ∘ Preventing desmoltification of salmonids in fresh water,
   ∘ Preventing and/or treatment of the disorder hemorrhagic smolt syndrome (HSS) in anadromous salmonids,
   ∘ Preventing and/or treatment scale edema that causes scale loss.
- Producing post smolt of anadromous salmonids in fresh water, for transfer to seawater (> 150 g).
- Production of anadromous salmonids in fresh water until the market size for consumption (> 100 grams, most often 5000 g)
- Production of brood stock of anadromous salmonids in fresh water, with respect to bring up eggs/roe.

The invention comprises, according to one aspect, combining a feed equivalent of the SuperSmolt® feed, with added magnesium salts and/or calcium salts in the feed, while not mixing these salts in operating the water, as in the SuperSmolt ® method.

According to another aspect the invention provides a method to:
- Produce smolt of anadromous salmonids for transfer to sea water (10-150 g)
- Maintaining the normal ion balance and osmoregulation for anadromous salmonids in fresh water, in order to achieve, including but not limited to,
   ∘ Preventing desmoltification of salmonids in fresh water,
   ∘ Preventing, curing or treating the disorder hemorrhagic smolt syndrome (HSS) in anadromous salmonids,
   ∘ Preventing, curing or treating the disorder shells edema that causes shells loss.
- Producing post smolt of anadromous salmonids in fresh water, for transfer to seawater (> 150 g).
- Production of anadromous salmonids in fresh water until the market size for consumption (> 100 grams, most often 5000 g)
- Production of brood stock of anadromous salmonids in fresh water, with respect to bring up eggs/roe.

The method comprises performing the following steps:
a. Providing a fish feed for parr or smolt, comprising protein, fat, carbohydrate, vitamins, minerals and water, NaCl from 10-100 g/kg, with added polyvalent cation receptor modulator (PVCR), for example, tryptophan or phenylalanin, 1-10 g/kg, and added calcium salts (Ca²⁺), for example the CaCl₂ between 0.1-100 g/kg, and/or magnesium salts (Mg²⁺), such as MgCl₂ between 0.1-100 g/kg.
b. Administering the feed to the fish according to appetite, while it is in fresh water or brackish water, until smoltification occurs.
c. Transferring the fish to seawater after smoltification.
Alternatively, the fish may be kept in freshwater after smoltification, in which case the method may comprise after steps a and b::
d. Keeping the fish in freshwater after smoltification has occurred,
e. Continuing to administer the fish feed to to the fish until it has reached a desired weight in fresh water and is suitable for human consumption, or until it has reached an age/weight suitable for the introduction of the sexual maturation, which can give fish eggs for the new production of fish or for consumption.

The invention will be described further in detail, with reference to the following examples.

### Materials and methods

### Biological material, environmental conditions and experimental setup

Six field trials were conducted, utilizing species of Atlantic salmon *(Salmo salar*) and rainbow trout (*Onchorhynchus mykiss*). The fish were at startup time vaccinated with oil-based vaccine and had regained appetite after vaccination. The fishs' average weight at startup was a minimum of 40 grams, and at the end in fresh water a maximum of 180 grams. Test diets were used under normal production conditions, in Norway and Chile in 2012 and 2013.

The test diets were fed to the fish, for a minimum of 3 weeks, to a maximum of 11 weeks, and only while it was in fresh water. Tables2 and 3 show the information about the species, stage, light conditions, water temperature, number of fish, fish size, test feed and the experimental setup.

**Table 2: Overview of the field trials, the lighting conditions, the water temperature and the type of test diets.**

| **Field trial No** | **Species** | **Time** | **Winter/Summer Signal** | **Water temperaturs** | **Type of test diet** |
|---|---|---|---|---|---|
| 1 | Atlantic salmon (*Salmo salar*) Norway | 19.Mar - 09.May 2012 | Photo manipulated fish. Fish receive test feed after winter signal, in combination with 24 hour light a day (summer signal) | 1 - 5 °C | 1 |
| 2 | Rainbow trout *(Onchorhynchus mykiss)* Chile | 23.Aug - 20. Sep 2012 | Photo manipulated fish. Fish receive test feed after winter signal, in combination with 24 hour light a day (summer signal) | 11 - 12°C | 2 |
| 3 | Atlantic salmon (*Salmo salar*) Norway | 9. Sep - 6. Dec 2012 | Continuously light 24 hour a day | 8 - 9 °C | 2 |
| 4 | Atlantic salmon (*Salmo salar*) Norway | 20.Sep - 20. Oct 2012 | Natural light conditions after autumn equinox. Decreasing daylight conditions | 12 - 8 °C | 2 |
| 5 | Atlantic salmon (*Salmo salar*) Norway | 15.Oct - 27. Dec 2012 | Photo manipulated fish. Fish receive test feed after winter signal, in combination with 24 hour light a day (summer signal) | 8 - 3 °C | 2 |
| 6 | Atlantic salmon (*Salmo salar*) Norway | 29.Aug - 24.Oct 2013 | Test: Continuously light 24 hour a day Contr: Winter/summer signal | 15-14 °C | 2 |

**Table 3: Overview of the field trials, the lighting conditions, the water temperature and the type of test diets.**

| **Field trial No** | **Species** | **Totalt number of fish in test (T) and control (C) group.** | **Start weights test (T) and control (C) group** | **Number of test units in test (T) and control (C)** |
|---|---|---|---|---|
| 1 | Atlantic salmon | | | T: 4 |
| | (*Salmo salar*) | | | C: 4 |
| | Norway | | | |
| 2 | Rainbow trout | T: 240 000 | T: 63 g | T: 4 |
| | *(Onchorhynchus* | C: | C: 63 g | C: 4 |
| | *mykiss)* | 240 000 | | |
| | Chile | | | |
| 3 | Atlantic salmon | T: 750 | T: 45 g | T: 3 |
| | (*Salmo salar*) | C: 750 | C: 45 g | C:3 |
| | Norway | | | |
| 4 | Atlantic salmon | T: 2 500 | T: 100 g | T: 1 |
| | (*Salmo salar*) | C: 80 000 | C: 80 g | C: 1 |
| | Norway | | | |
| 5 | Atlantic salmon | T: 353 000 | T: 81, 82 og 108 | T: 3 |
| | (*Salmo salar*) | C: 178 000 | g | C: 2 |
| | Norway | | C: 83 og 105 g | |
| 6 | Atlantic salmon | T: 80 000 | T: 70 g | T: 1 |
| | (*Salmo salar*) | C: | C: 60 g | C:1 |
| | Norway | 80 000 | | |

### Composition of the test diets

The fish feed is understood here as a feed composed of protein, fats, carbohydrates, vitamins and minerals, suitable for parr and smolt of salmonids in fresh water.

Test diet 1 (corresponding to SuperSmolt ® feed):
a. Fish feed added 7 % NaCl
b. Fish feed added 0,4 % L-tryptophan

Test diet 2 (corresponding to an embodiment of the fish feed according to the present invention):
a. Fish feed added 6 % NaCl
b. Fish feed added 0,75 % CaCl₂
c. Fish feed added 0,25 % MgCl₂
d. Fish feed added 0,4 % L-tryptophan

### Control diets:

a. Growth feed for parr and smolt produced by Skretting AS
b. Growth feed for parr and smolt produced by Ewos AS

### Parameters to monitor the effect of the test and control diet

Sampling was performed, just before the fish received test diet/control diet and immediately before transfer of fish to seawater. In addition, sampling was performed in between, start and endpoint sampling.

### The Na⁺-K⁺-ATPase enzyme activity in gill tissue

Sampling was performed, just before the fish was fed with test diet and just before the transfer of fish to seawater. Sampling was also in varying degrees, performed in between, start and endpoint sampling.

During smoltification, it is normal to observe increasing amount of Na⁺-K⁺-ATPase enzyme in the gill tissue. The main function of this enzyme is to pump salts out of the fish's body, necessary to maintain osmotic balance in seawater. Gill tissue from the second gill bow were transferred to a tube, then immediately frozen in liquid nitrogen (-180 ° C), in order then to be analyzed for the amount of gill enzyme at FishGuard AS, Leknes (formerly MultiLab AS), following the method described by McGormick (1993).

### Number of copies of the alpha 1a mRNA (freshwater ATPase):

Sampling was performed, just before the fish was fed with test diet and immediately before transfer of fish to seawater. Sampling was also in varying degrees, performed in between, start and endpoint sampling.

The main function of the enzyme, as the alpha 1a mRNA codes for, is to pump the salts from the fresh water into the fish body. Adaption to a life in seawater means that this enzyme activity has to be decreased, and similar for the gene expression. During the smoltification process, the number of copies of alpha 1a mRNA in the fish's gills, decrease. Gill tissue from the third gill bow was transferred to a tube with mRNA-later, to be analyzed for the number of copies of the alpha 1a mRNA, in accordance with a method developed by FishGuard AS (2013).

### Smolt index

Through the smoltification process, the appearance of the fish change (morphological changes) was observed. This change is measured with the help of the smolt index score and is based on a visual score from 1-4 for each of the parameters, silvering in skin, parr marks and black find edges, see table 4.

Smolt index score is the average of the scores for these three parameters together. Smolt index was registered, at the same time as sampling of gill tissue for the analysis of the Na⁺-K⁺-ATPase enzyme.

**Table 4. Overview smolt index score**

| Parameter | None | Weak | Visible | Strong |
|---|---|---|---|---|
| Silvering score | 1 | 2 | 3 | 4 |
| Parr mark score | 1 | 2 | 3 | 4 |
| Black fin edge score | 1 | 2 | 3 | 4 |
| Average of the sum score of silvering, parr mark, black fin edges, gives the smolt index score | 1 | 2 | 3 | 4 |

### Chloride in the blood plasma of fish in seawater test.

Where one had opportunities to conduct a seawater test, fish was sampled for transfer to 34‰ sea water and held there for 96 hours, during the smoltification process. Then blood samples were collected from the fish, and the blood plasma was analyzed for content of chloride ions (Cl-) after the method used at Central Laboratory at the Norwegian School of Veterinary Science (2012). This is a method to determine whether the salmon fish in fresh water is smoltified satisfactory. If the fish has a normal osmoregulation in seawater (chloride level in the blood plasma between 120-150 mmol/l) in 34‰ sea water after 96 hours, this is a sign that the fish is in the smolt window.

### Ions in the blood plasma of fish in fresh water

By two field trials, blood samples were collected from the fish in fresh water, for the analysis of Ca, Mg and Cl in the blood plasma. Central Laboratory at the Norwegian School of Veterinary Science (2012) conducted the analysis.

### Mortality rate in fresh water and seawater

In fresh water, recording of percent deaths during use of test feed and control feed, was performed until transfer of fish to seawater. Observation of mortality rate in seawater in the group given control feed, vs group given test feed in fresh water. Registration of death rates after 30, 60 and 90 days, as well as the total mortality when harvest (one sea farm).

### The statistics

Part of the material was processed statistically, to determine whether the change between two measuring points in the test group was statistically significant (p = 0.05, and p = 0.01). Similar examination of control the group, was performed.

### Results

### Field trial 1

### Na+-K+-ATPase enzyme activity in gill tissue

Diagram 1 shows the development of the Na⁺-K⁺-ATPase enzyme in the gill tissue in field trial 1, where use of test diet 1 is compared with control diet a, that is growth feed for juveniles produced by Skretting AS. The results are the average of the sampling results from 4 tanks of the test (n = 24/sampling) and 4 tanks as the controls (n = 24/sampling).

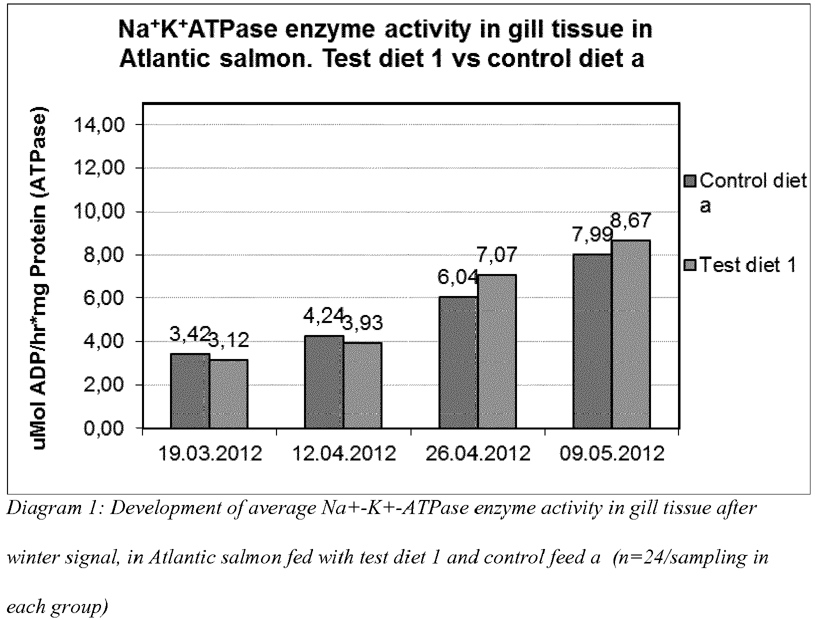

Between 19.03.12 and 12.04.12, there was significant change in ATPase (p = 0.05) in the control group, while the test group had no significant change in the ATPase (p = 0.05). Between 26.04.12 and 09.05.12, there was significant change in the ATPase in the control group within the 99% confidence interval (p = 0.05, and p = 0.01), whereas the test group only had significant change in the ATPase within the 95% confidence interval (p = 0.05). Table 5 provides an overview of the theme.

**Table 5 : Significant change between two sample points for the ATPase within a group (p = 0.05 or p = 0.01). These are then compared between the control group and test group. Other comparisons between the sampling points in the control and test group, gave no such difference in the observed significance.**

| **Control diet a** | | | | | **Test diet 1** | | | | |
|---|---|---|---|---|---|---|---|---|---|
| **ATPase** | | **P value** | **Sig 95% CI** | **Sig 99% CI** | **ATPase** | | **P value** | **Sig 95% CI** | **Sig 99% CI** |
| 19.03.2012 | 12.04.2012 | 0,02 | yes | no | 19.03.2012 | 12.04.2012 | 0,48 | no | no |
| 26.04.2012 | 09.05.2012 | 0,01 | yes | yes | 26.04.2012 | 09.05.2012 | 0,02 | yes | no |

### The number of copies of the alpha 1a mRNA (freshwater ATPase)

It was not brought out samples for the analysis of the number of copies of the alpha 1a mRNA, fresh water ATPase.

### Smolt index

Diagram 2 shows the development of the smolt index in field trial 1, where test diet 1 is compared with the control diet a, a growth feed for juveniles produced by Skretting AS. The results are the average of the sample withdrawal from the 4 tanks of the test (n = 24/sampling) and 4 tanks as the control (n = 24/sampling). Between 19.03.12 and 26.04.12, there was significant change in smolt index (p = 0.01) in the control group, while the test group had no significant change in smolt index (p = 0.01). Between 12.04.12 and 26.04.12, there was significant change in smolt index (p = 0.05 and 0.01) in the control group, while the test group had no significant change in smolt index (p = 0.05 and 0.01). Table 6 provides an overview of the theme.

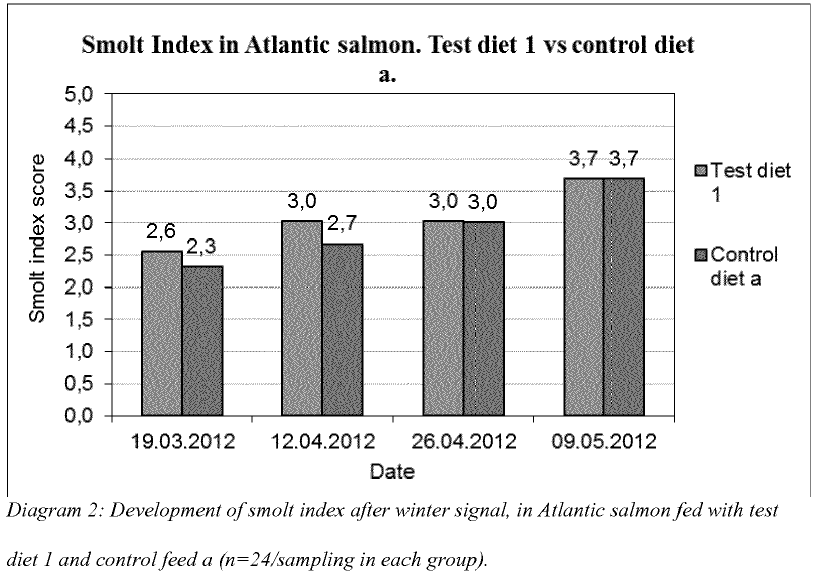

**Table 6: Significant change between two sample points for the smoltindeks within a group (p = 0.05 or p = 0.01). These are then compared between the control group and test group. Other comparisons between the sampling points in the control and test group, gave no such difference in the observed significance.**

| **Control diet a** | | | | | **Test diet 1** | | | | |
|---|---|---|---|---|---|---|---|---|---|
| **Smolt index** | | **P value** | **Sig 95% CI** | **Sig 99% CI** | **Smolt index** | | **P value** | **Sig 95% CI** | **Sig 99% CI** |
| 19.03.12 | 26.04.12 | 0,00 | yes | yes | 19.03.12 | 26.04.12 | 0,04 | yes | no |
| 12.04.12 | 26.04.12 | 0,00 | yes | yes | 12.04.12 | 26.04.12 | 0,55 | no | no |

### Chloride in blood plasma offish in seawater challenge test.

Diagram 3 shows the development in plasma chloride in field trials 1, when use of test diet 1, and compared with control diet a, a growth feed for juveniles produced by Skretting AS. The results are the average of the sample withdrawal from the 2 tanks in the test (n = 15/sampling) and 2 tanks as control (n = 15/sampling).

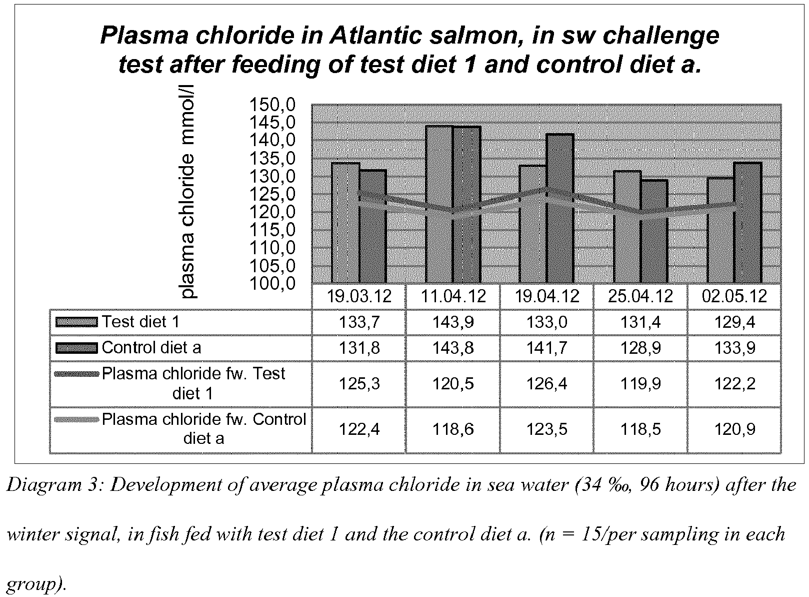

### Ions in the blood plasma of fish in fresh water

Diagram 4 and 5 show the single point measurement 11. April 2012, for plasma magnesium, plasma calcium and plasma chloride, in fresh water in field trial 1, where a used test diet 1, and compared with control diet a. The results are averaged from fish suffering from hemorrhagic smoltsyndrom (HSS) in the test tanks (n = 6) and control tanks (n = 6). This is compared with the average from the normal fish in the control group (n = 6), normal fish in fresh water from the field trial 3 (n = 19) and the reference value from the literature (Jakobsen, 2013). It has not succeeded to find reference values for the normal plasma calcium in Atlantic salmon, in the literature.

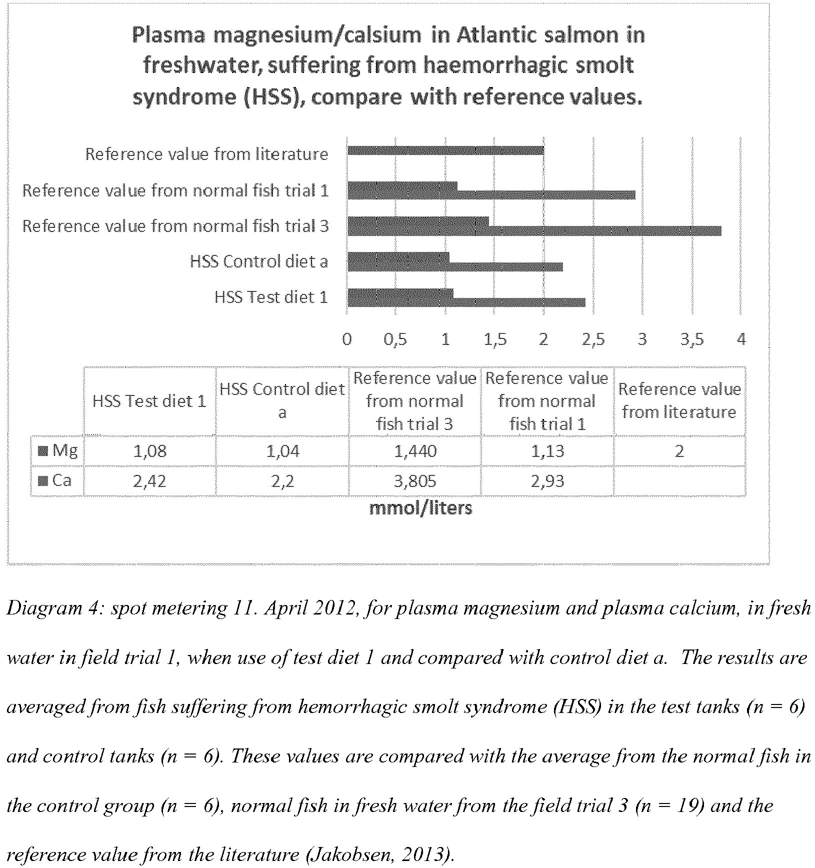

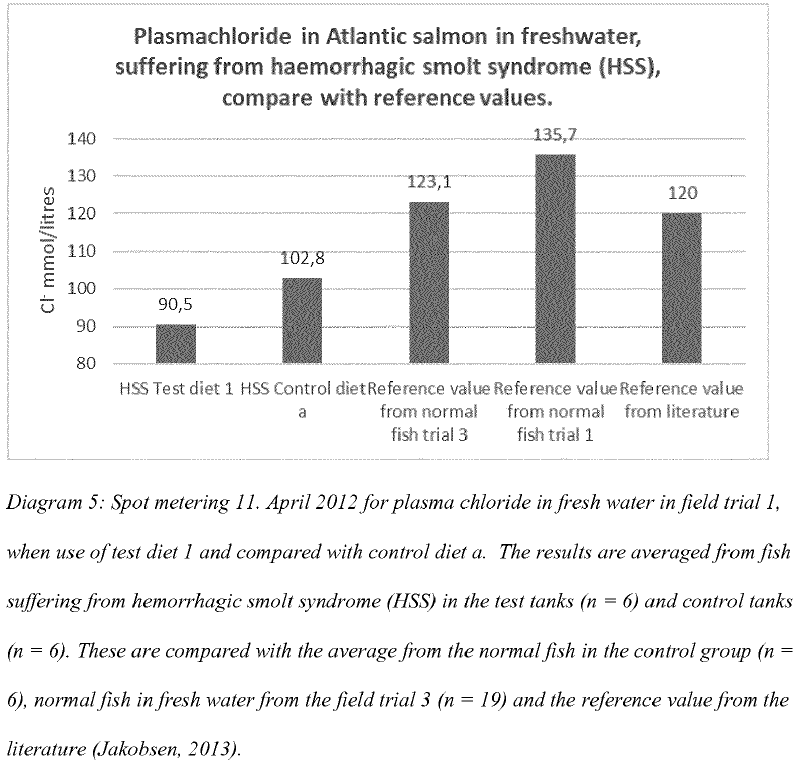

### Mortality rate in fresh water

Mortality during the experimental period in fresh water, is illustrated in diagram 6. The highest mortality rate was around 10. of April 2012. The fish had the classic authposy findings, compatible with hemorragic smolt syndrome (HSS), including pale gills and pale internal organs, multiple petechiale bleeding in muscles, in abdominal adipose tissue and viscera (Halse, 2012).

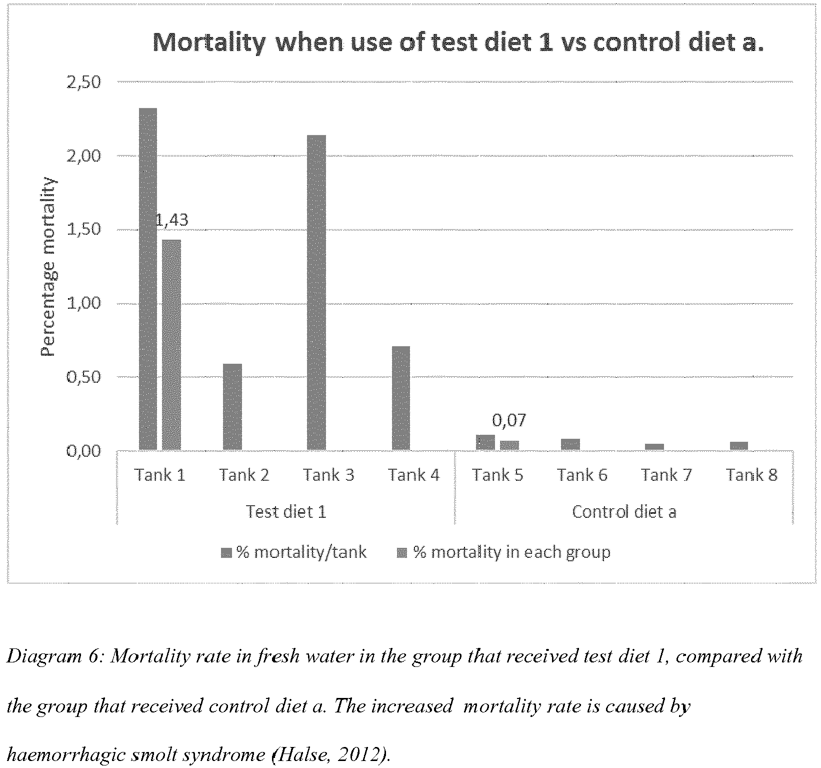

### Field trial 2

### Na+-K+-ATPase enzyme activity in gill tissue.

Diagram 7 shows the development of the Na +-K +-ATPase enzyme in gill tissue in field trial 2, when use of test diet 2, compared with control diet a, that is a growth feed for juveniles produced by Skretting as. The results are the average of sampling from 4 cages in fresh water from the test group (n = 25/sampling) and 4 cages in fresh water as the control group (n = 25/sampling).

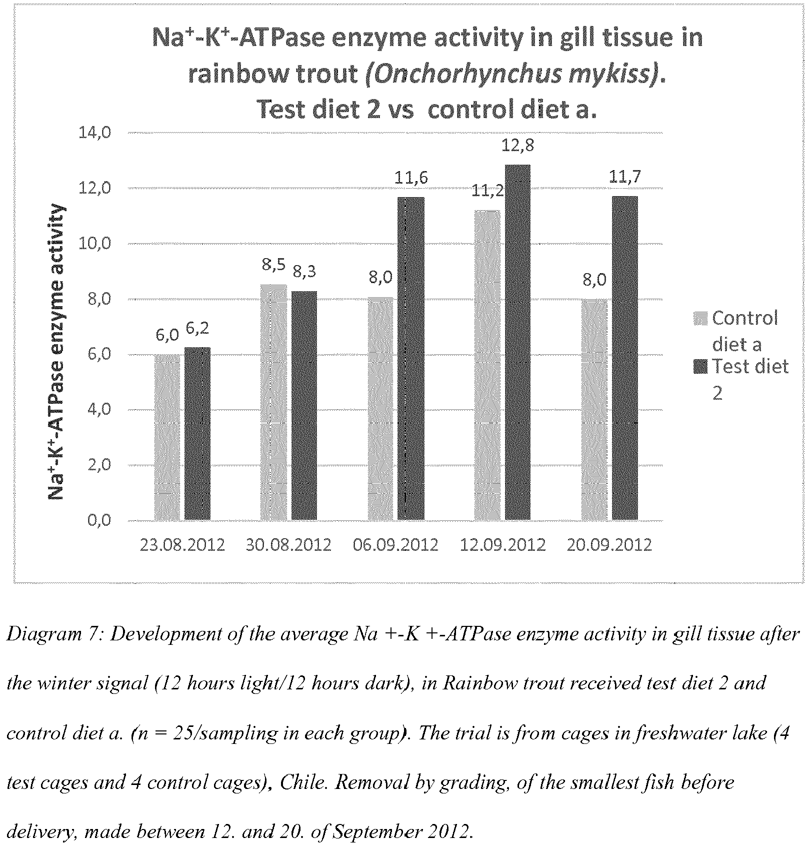

Between sampling points 30.08.12 and 06.09.12, 30.08.12 and 20.09.12, 30.08.12 and 27.09.12, there was significant increase in ATPase (p = 0.01) in the test group, while the control group had no significant change in the ATPase neither within the 99% or 95% confidence intervals (p =0.01 and p = 0.05). Between 06.09.12 and 12.09.12, there was significant increase in the ATPase in the control group within the 99% confidence interval (p = 0.01), observed a week later than the test group. Between the 12.09.12 and 20.09.12, a significant drop in the ATPase in the control group within the 99% confidence interval occur, whereas the test group has no significant change in the ATPase. Table 7 provides an overview of the theme.

**Table 7: Significant change between two sample points for the ATPase within a group (p = 0.05 or p = 0.01). These are then compared between the control group and test group. Other comparisons between the sampling points in the control and test group, gave no such difference in the observed significance.**

| **ATPase control diet a** | | **P value** | **Sig 95% CI** | **Sig 99% CI** | **ATPase test diet 2** | | **P value** | **Sig 95% CI** | **Sig 99% CI** |
|---|---|---|---|---|---|---|---|---|---|
| 30.08.2012 | 06.09.2012 | 0,55 | no | no | 30.08.2012 | 06.09.2012 | 0,00 | yes | yes |
| 30.08.2012 | 20.09.2012 | 0,47 | no | no | 30.08.2012 | 20.09.2012 | 0,00 | yes | yes |
| 30.08.2012 | 27.09.2012 | 0,49 | no | no | 30.08.2012 | 27.09.2012 | 0,00 | yes | yes |
| 06.09.2012 | 12.09.2012 | 0,00 | yes | yes | 06.09.2012 | 12.09.2012 | 0,06 | no | no |
| 12.09.2012 | 20.09.2012 | 0,00 | yes | yes | 12.09.2012 | 20.09.2012 | 0,16 | no | no |

### The number of copies of the alpha 1a mRNA (freshwater ATPase)

It was not brought out samples for the analysis of the number of copies of the alpha 1a mRNA, fresh water ATPase.

### Smolt index

No sampling for smolt index review in this trial.

### Chloride in blood plasma offish in seawater challenge test.

The smolt hatchery had no opportunity to carry out sea-water test, and no samples were taken out.

### Ions in the blood plasma of fish in fresh water

No samples of the ions in the plasma of fish in fresh water carried out

### Mortality rate in fresh water and seawater

The mortality in fresh water phase was normal. After 60 days at sea, the deaths rate was 0.62% for fish given test diet 2 and 0.71% for fish given control diet a, in fresh water.

### Field trial 3

### Na+-K+-ATPase enzyme activity in gill tissue.

Diagram 8 shows the average development of the Na+-K+-ATPase enzyme in gill tissue in field trial 3, when use of test diet 2, compared with control diet a. Results are averages of sampling from 3 tanks in fresh water in the test group (n = 30/sampling) and 3 tanks in fresh water in the control group (n = 30/sampling).

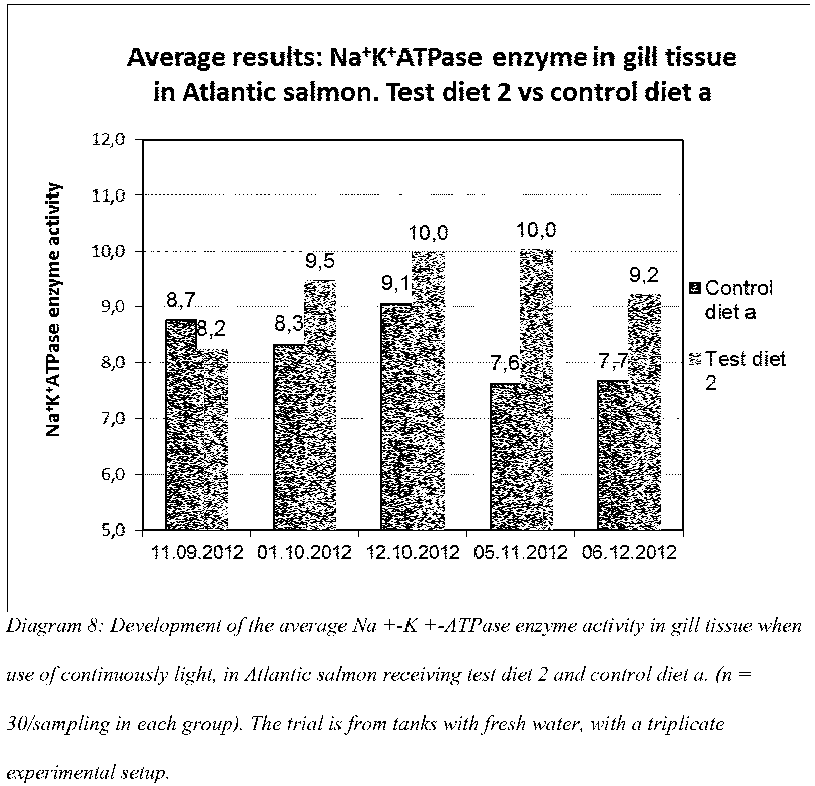

Between sampling points 11.09.12 and 12.10.12, 11.09.12 and 05.11.12, there was a significant increase in ATPase (p = 0.05) in the test group, while the control group had no significant change in the ATPase within the 95% confidence interval (p = 0.05). Between 12.10.12 and 05.11.12, there were significant decreases in ATPase in the control group within the 95% confidence intervals (p = 0.05), whereas the test group did not have a significant change. Table 8 provides an overview of the theme.

**Table 8: Significant change between two sample points for the ATPase within a group (p = 0.05 or p = 0.01). These are compared between the control group and test group. Other comparisons between the sampling points in the control and test group, did not show any difference in the observed significance.**

| **Overall score** | | | | | **Overall score** | | | | |
|---|---|---|---|---|---|---|---|---|---|
| **Control diet a** | | | | | **Test diet 2** | | | | |
| **Atpase** | | **P value** | **Sig 95% CI** | **Sig 99% CI** | **Atpase** | | **P value** | **Sig 95% CI** | **Sig 99% CI** |
| 11.09.2012 | 12.10.2012 | 0,68 | No | No | 11.09.2012 | 12.10.2012 | 0,04 | Yes | No |
| 11.09.2012 | 05.11.2012 | 0,14 | No | No | 11.09.2012 | 05.11.2012 | 0,02 | Yes | No |
| 12.10.2012 | 05.11.2012 | 0,03 | Yes | No | 12.10.2012 | 05.11.2012 | 0,94 | No | No |

### The number of copies of the alpha 1a mRNA (freshwater ATPase)

Sampling was partly performed for the analysis of the number of copies of the alpha 1a mRNA, fresh water ATPase, in replicate 1 and replicates 2. The results revealed in diagram 9 and 10. Replicate 1, shows that test diet 2 gives after two week's use (01.10.12) a variation between 441 000 - 501000 copies of alpha-1a mRNA (freshwater ATPase). This is clearly below the limit value of 1186 000 copies. For control diet a, we see that the fish express a high number of copies of the alpha 1a mRNA 12.10.12, and after this down regulate the expression to the same level as test diet 2.

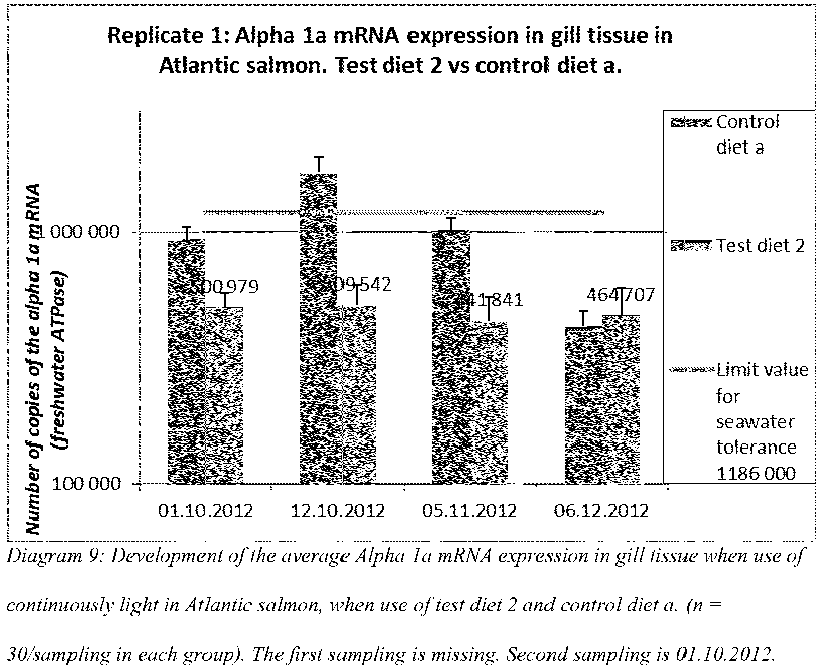

Between sampling points 01.10.12 and 12.10.12, there is a significant increase in the expressed alpha 1a mRNA (p = 0.05) in the control group, whereas the test group had no significant change in the alpha 1a mRNA within the 95% confidence intervals (p = 0.05). Between 01.10.12 and 06.12.12 there is a significant decrease in the number of alpha 1a mRNA copies in the control group within the 99% confidence interval (p = 0.01), whereas the test group did not have a significant change. The same applies between the 12.10.12 and the 05.11.12 (within the 95% confidence interval), 12.10.12 and 06.12.12, as well as between 05.11.12 and 06.12.12. The test group did not revealed any similar changes between the sampling points. Table 9 provides an overview of the theme.

**Table 9: Significant change between two sample points for the number of copies of the alpha 1a mRNA within a group (p = 0.05 or p = 0.01). These are then compared between the control group and test group. Other comparisons between the sampling points in the control and test group, did not show any difference in the observed significance.**

| **Replicate 1** | | | | | **Replicate 1** | | | | |
|---|---|---|---|---|---|---|---|---|---|
| **Control diet a** | | | | | **Test diet 2** | | | | |
| **mRNA** | | **P value** | **Sig 95% CI** | **Sig 99% CI** | **mRNA** | | **P value** | **Sig 95% CI** | **Sig 95% CI** |
| 01.10.2012 | 12.10.2012 | 0,03 | Yes | No | 01.10.2012 | 12.10.2012 | 0,95 | No | No |
| 01.10.2012 | 06.12.2012 | 0,00 | Yes | Yes | 01.10.2012 | 06.12.2012 | 0,83 | No | No |
| 12.10.2012 | 05.11.2012 | 0,04 | Yes | No | 12.10.2012 | 05.11.2012 | 0,68 | No | No |
| 12.10.2012 | 06.12.2012 | 0,00 | Yes | Yes | 12.10.2012 | 06.12.2012 | 0,81 | No | No |
| 05.11.2012 | 06.12.2012 | 0,00 | Yes | Yes | 05.11.2012 | 06.12.2012 | 0,91 | No | No |

Replicate 2, shows that control feed gives from the second week of use (01.10.12), a variation between 1517 000 to 786 000 copies of alpha1a mRNA (freshwater ATPase). This is above the limit value for seawater tolerance (set to 1186 000 copies) for the first three samplings, while the last sampling is under the limit value. For test diet 2, we see that the fish express low number of copies of the alpha 1a mRNA, 05.11.12 and 06.12.12, between 413 000 and 396 000 copies. Diagram 10 provides an overview of the results.

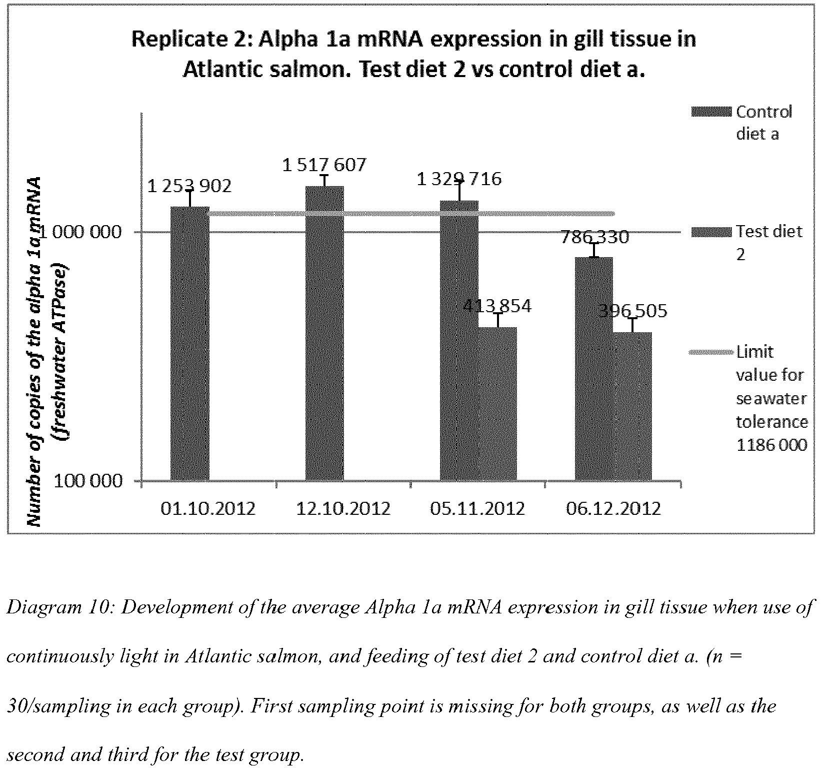

Between sampling points 12.10.12 and 06.12.12, there is a significant decrease in the expression of the number of alpha 1a mRNA copies (p = 0.01) in the control group. Between 05.11.12 and 06.12.12, there is no significant decrease in the number of alpha 1a mRNA copies in the control group within the 95% confidence intervals (p = 0.01), nor in the test group. Table 10 provides an overview of the theme.

**Table 10: Significant change between two sample points for the number of copies of the alpha 1a mRNA within a group (p = 0.05 or p = 0.01). These are then compared between the control group and test group.**

| **Replicate 2** | | | | | **Replicate 2** | | | | |
|---|---|---|---|---|---|---|---|---|---|
| **Control diet a** | | | | | **Test diet 2** | | | | |
| **mRNA** | | **P value** | **Sig 95% Cl** | **Sig 99% Cl** | **mRNA** | | **P value** | **Sig 95% Cl** | **Sig 99% Cl** |
| 01.10.2012 | 12.10.2012 | 0,37 | No | No | | | | | |
| 01.10.2012 | 05.11.2012 | 0,83 | No | No | | | | | |
| 01.10.2012 | 06.12.2012 | 0,08 | No | No | | | | | |
| 12.10.2012 | 05.11.2012 | 0,57 | No | No | | | | | |
| 12.10.2012 | 06.12.2012 | 0,00 | Yes | Yes | | | | | |
| 05.11.2012 | 06.12.2012 | 0,09 | No | No | 05.11.2012 | 06.12.2012 | 0,84 | No | No |

### The number of copies of the alpha 1a mRNA (freshwater ATPase) related to water temperature

Alpha 1a mRNA results from the test group and control group, are correlated to the freshwater temperature. Diagram 11 shows the percentage share of these samples that are below the limit value for seawater tolerance, 1186 000 copies of the alpha 1a mRNA. The chart also shows the water temperature in the same period. At water temperatures between 8.1 and 8.9 °C, 90 and 100% of the values in the samples in the test group, are under the limit for seawater tolerance. This share was stable throughout the smoltification process, in the same way that the water temperature was stable. The corresponding values in the control group, was between 20% and 100%, and the lowest share, was observed at the start of the observation period.

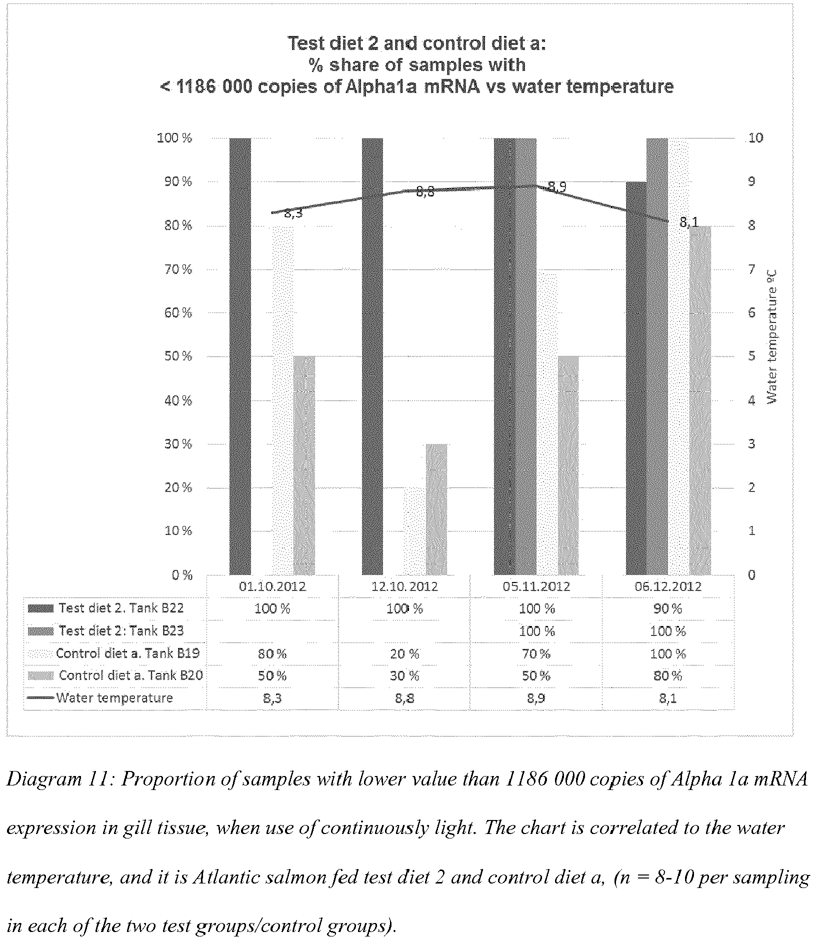

### Smolt index

Diagram 12 shows the development in smolt index in field trial 3, when use of test diet 2, compared with control diet a, a growth feed for juveniles produced by Skretting as. The results are the average of the sampling from 3 tanks in the test (n = 30/sampling) and 3 tanks in the control (n = 30/sampling).

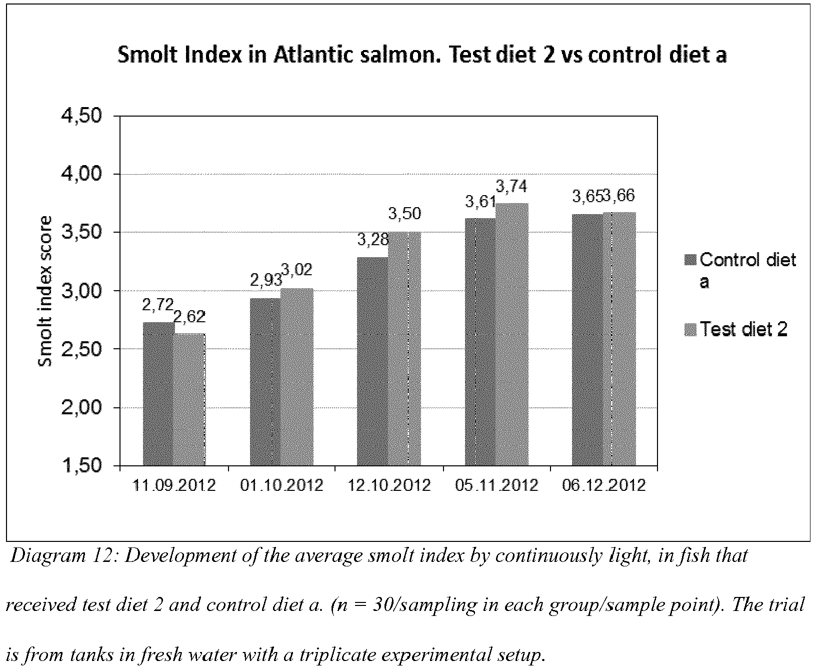

Between 11.09.12 and 01.10.12, there was significant increase in smolt index (p = 0.01) in the test group, while the control group had no significant change in smolt index (p = 0.05). Between 01.10.12 and 12.10.12, there was significant increase in smolt index (p = 0.05) in the control group, while the test group had a significantly stronger increase in smolt index (p = 0.01). Between 12.10.12 and 06.12.12, there was significant increase in smolt index (p = 0.01) in the control group, while the test group had no significant change in smolt index
(p = 0.05). Table 11 provides an overview of the theme.

**Table 11: Significant change between two sample points for the smolt index within a group (p = 0.05 or p = 0.01). These are then compared between the control group and test group. Other comparisons between the sampling points in the control and test group, gave no such difference in the observed significance.**

| **Overall score** | | | | | **Overall score** | | | | |
|---|---|---|---|---|---|---|---|---|---|
| **Control diet a** | | | | | **Test diet 2** | | | | |
| **Smolt index** | | **P value** | **Sig 95% Cl** | **Sig 99% Cl** | **Smolt index** | | **P value** | **Sig 95% Cl** | **Sig 99% Cl** |
| 11.09.2012 | 01.10.2012 | 0,08 | No | No | 11.09.2012 | 01.10.2012 | 0,00 | Yes | Yes |
| 01.10.2012 | 12.10.2012 | 0,02 | Yes | No | 01.10.2012 | 12.10.2012 | 0,00 | Yes | Yes |
| 12.10.2012 | 06.12.2012 | 0,00 | Yes | Yes | 12.10.2012 | 06.12.2012 | 0,12 | No | No |

### Blood plasma chloride in fish in sea-water challenge test

Diagram 13 and 14 show the status in plasma chloride in field trial 3, after exposure of fish in 34 ‰ sea water in 144 hours, when use of test diet 2, compared with control diet a, in 11 weeks before the sea-water exposure. The results are the average of the sampling from the 3 tanks in the test (n = 30/sampling) and 3 tanks from the control (n = 20/sampling). Average values in the control group, were 139.6 mmol/l in plasma chloride and for test group 139.0 mmol/l in plasma chloride.

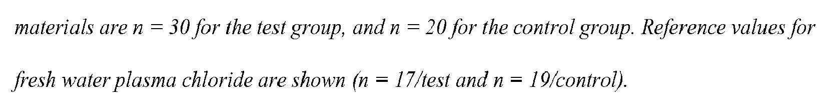

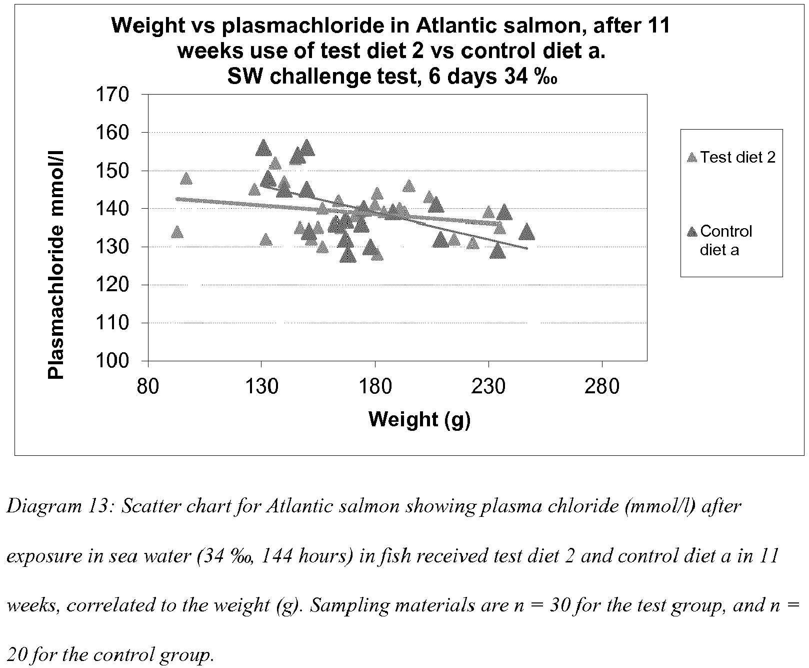

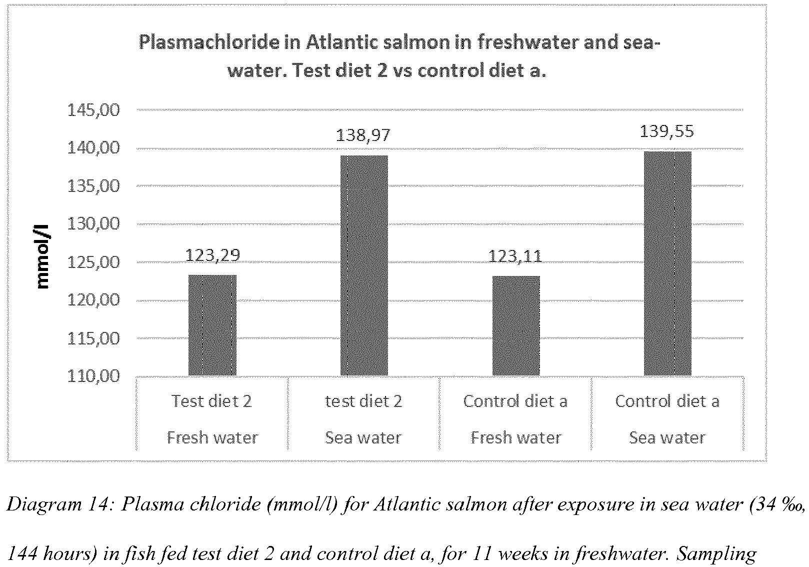

### Other ions in the blood plasma of fish in fresh water and seawater

There was no observation of fish with hemorrhagic smolt syndrome in field trial 3. Diagram 15 shows the average levels of magnesium and calcium in blood plasma of salmon in fresh water and seawater.

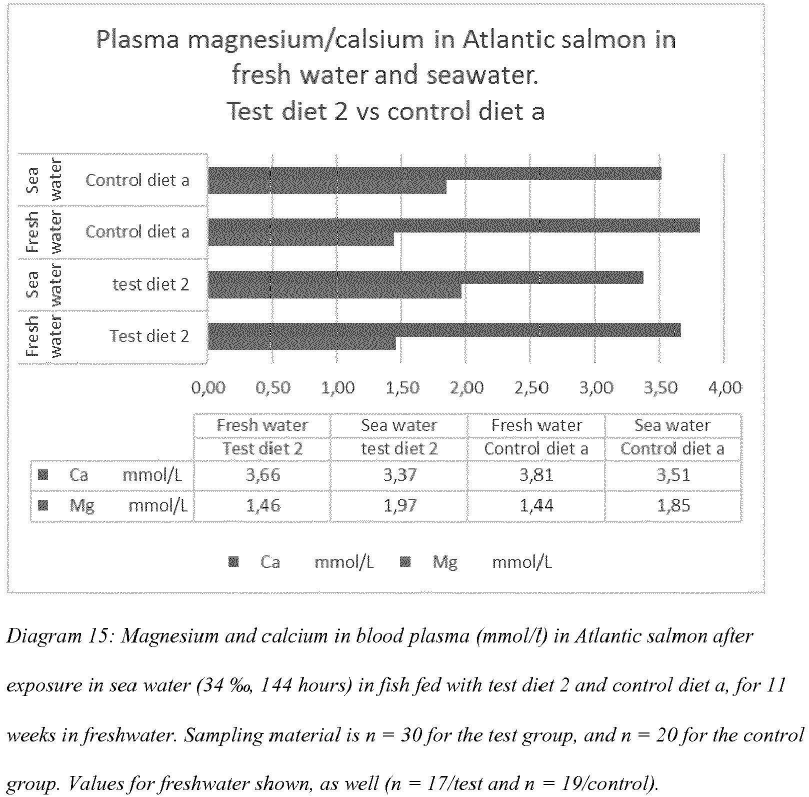

### Mortality rate in fresh water and seawater

There was no abnormal mortality observed. After 144 hours in seawater, the fish was destroyed.

### Field trial 4

### Na+-K+-ATPase enzyme activity in gill tissue

Diagram 16 shows the development of the Na +-K +-ATPase enzyme in gill tissue in field trial 4, where use of test diet 2 is compared with the control diet b, which is growth feed for juveniles, produced by Ewos AS. The results are the average of the sampling material from a cage in the fresh water in the test (n = 20/sampling), vs a cage in fresh water as the control (n = 20/sampling). The experiment is carried out under natural light conditions, mostly after the autumnal Equinox.

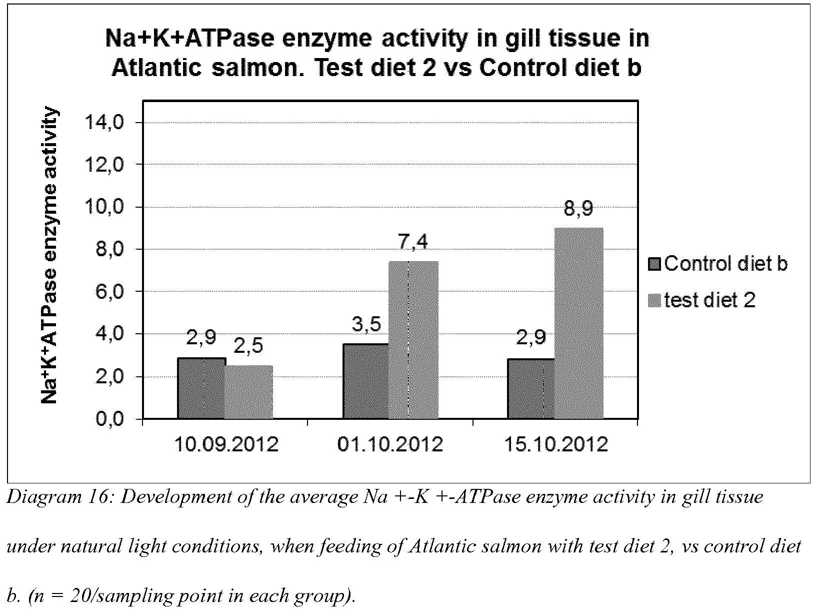

Between 10.09.12 and 01.10.12, there was significant change in ATPase (p = 0.01) in the test group, while the control group during the same period had no significant change in the ATPase (p = 0.05). Between 10.09.12 and 15.10.12, there was significant change in the ATPase in the test group within the 99% confidence interval (p = 0.01), while the control group had no significant change in the ATPase within the 95% confidence interval (p = 0.05). Table 12 provides an overview of the theme.

**Table 12: Significant change between two sample points for the ATPase within a group (p = 0.05 or p = 0.01). These are then compared between the control group and test group. Other comparisons between the sampling points in the control and test group, gave no such difference in the observed significance.**

| **Control diet b** | | | | | **Test diet 2** | | | | |
|---|---|---|---|---|---|---|---|---|---|
| **ATPase** | | **P value** | **Sig 95% Cl** | **Sig 99% Cl** | **ATPase** | | **P value** | **Sig 95% Cl** | **Sig 99% Cl** |
| 10.09.2012 | 01.10.2012 | 0,11 | No | No | 10.09.2012 | 01.10.2012 | 0,00 | Yes | Yes |
| 11.09.2012 | 15.10.2012 | 0,99 | No | No | 11.09.2012 | 15.10.2012 | 0,00 | Yes | Yes |

### Number of copies of the alpha 1a mRNA (freshwater ATPase)

Sampling was performed, for the analysis of the number of copies of alpha 1a mRNA, freshwater ATPase. The results revealed in diagram 17. This shows that the test diet 2 gives a decreased expression of freshwater ATPase, compared with the control diet b. For test diet 2, we see a reduction in the number of copies of the alpha 1a mRNA from 2.59 million to 0.67 million copies, clearly below the limit value of 1186 000 copies. The difference between the sampling points are significant within the 99% confidence interval (p = 0.01). Use of control diet b provides a marginal decrease in the number of copies, from 2.59 million to 2.57 million copies at the last sampling point. The decline is not significant between the sampling points. Table 13 provides an overview of the theme.

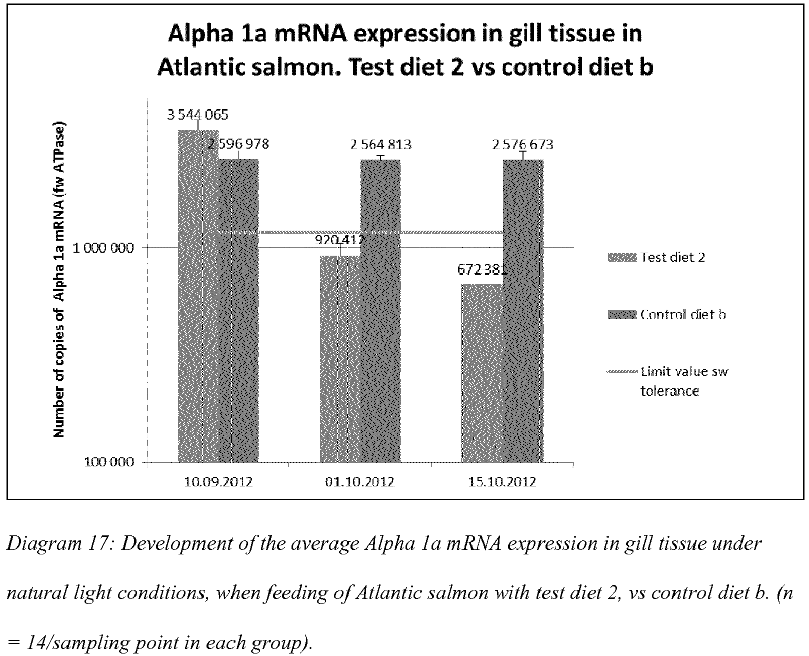

**Table 13: Significant change between two sample points for the number of copies of the alpha 1a mRNA within a group (p = 0.05 or p = 0.01). These are then compared between the control group and test group.**

| **Control diet b** | | | | | **Test diet 2** | | | | |
|---|---|---|---|---|---|---|---|---|---|
| **mRNA** | | **P value** | **Sig 95% Cl** | **Sig 99% Cl** | **mRNA** | | **P value** | **Sig 95% Cl** | **Sig 99% Cl** |
| 10.09.2012 | 01.10.2012 | 0,89 | No | No | 10.09.2012 | 01.10.2012 | 0,00 | Yes | Yes |
| 10.09.2012 | 15.10.2012 | 0,95 | No | No | 10.09.2012 | 15.10.2012 | 0,00 | Yes | Yes |
| 01.10.2012 | 15.10.2012 | 0,96 | No | No | 01.10.2012 | 15.10.2012 | 0,00 | Yes | Yes |

### Smolt index

Diagram 18 shows the development in smolt index in field trial 4, when use of test diet 2, compared with control diet b. The results are the average of the sampling material from a cage in the test (n = 20/sampling) and a cage as the control (n = 20/sampling).

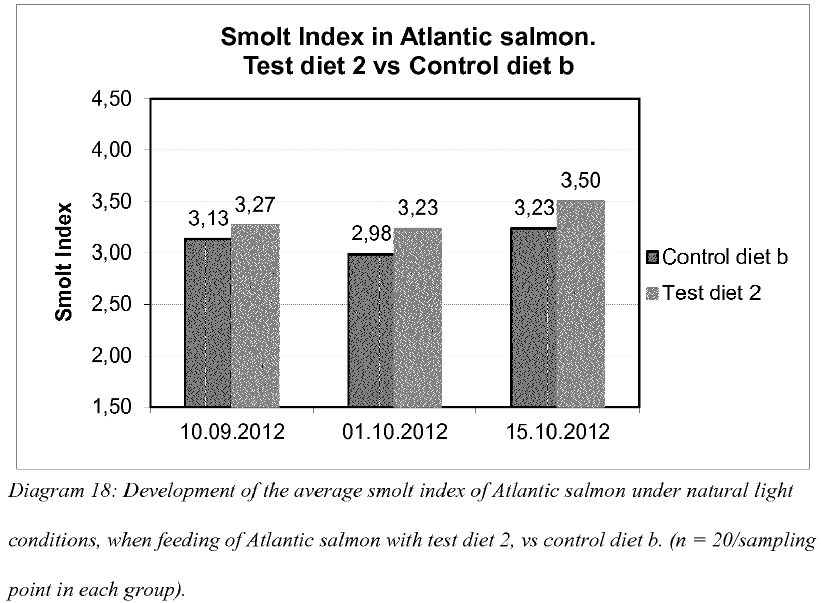

Between 10.09.12 and 15.10.12, there was significant increase in smolt index (p = 0.05) in the test group, while the control group during the same period had no significant change in smolt index (p = 0.05). Table 14 provides an overview of the theme.

**Table 14: Significant change between two sample points for the smolt index within a group (p = 0.05 or p = 0.01). These are then compared between the control group and test group. Other comparisons between the sampling points in the control and test group, gave no such difference in the observed significance.**

| **Controll diet b** | | | | | **Test diet 2** | | | | |
|---|---|---|---|---|---|---|---|---|---|
| **Smolt index** | | **P value** | **Sig 95% Cl** | **Sig 99% Cl** | **Smolt index** | | **P value** | **Sig 95% Cl** | **Sig 99% Cl** |
| 10.09.2012 | 15.10.2012 | 0,38 | nei | nei | 10.09.2012 | 15.10.2012 | 0,01 | ja | nei |

### Chloride in the blood plasma of fish in the seawater challenge test.

It was not carried out any seawater challenge test, in this field trial

### Ions in the blood plasma of fish in fresh water

It was not brought out any samples for the analysis of ions in the blood plasma, while fish stayed in freshwater.

### Mortality rate in fresh water and seawater

It was not observed abnormal mortality in fresh water. The fish that had received test diet 2, was previously tagged by clipping of the fat fin. This fish was transferred to the same cage in the sea, as a photo-manipulated group (different from the fresh-water control group). It was observed 0.08 % mortality rate from expose to the slaughter of the fish. The mortality rate occurred immediately after the expose to seawater.

### Field trial 5

### Na+-K+-ATPase enzyme activity in gill tissue

Diagram 19 shows the development of the Na +-K +-ATPase enzyme in gill tissue in field trial 5, when use of test diet 2, vs control diet b, which is a growth feed for juveniles produced by Ewos AS. The results are the average of the sampling material from 3 tanks in the test, and 2 tanks in the control. Overview of the number of tanks and the number of fish at each sampling, can be found in table 15.

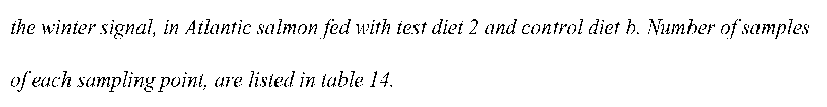

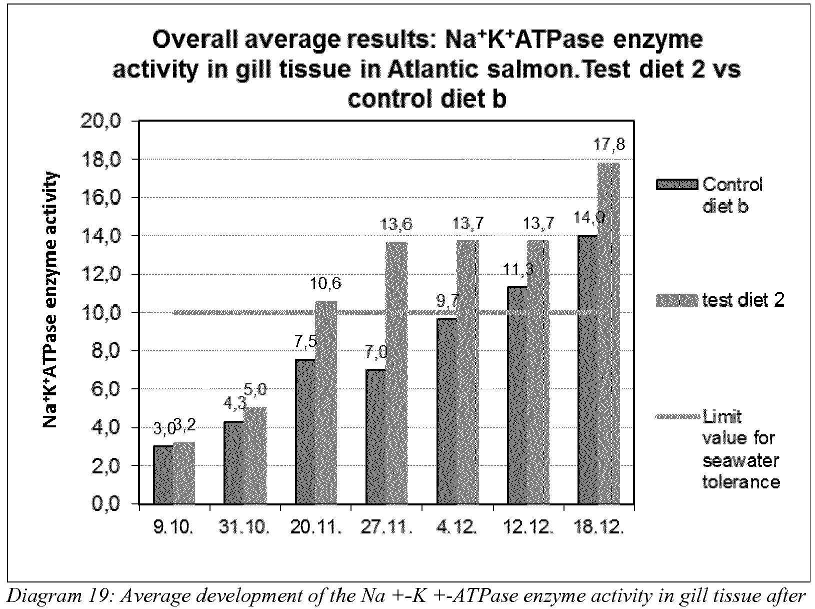

**Table 15: Overview of the number of tanks and the number of fish, at each samplingpoint in field trial 5.**

| **Sampling date** | **N° of tanks in control group** | **N° of samples in control group** | **N° of tanks in test group** | **N° of samples in test group** |
|---|---|---|---|---|
| **09.10.2012** | 2 | 20 | 3 | 30 |
| **31.10.2012** | 2 | 20 | 3 | 30 |
| **20.11.2012** | 2 | 20 | 3 | 30 |
| **27.11.2012** | 1 | 10 | 1 | 10 |
| **04.12.2012** | 2 | 20 | 2 | 20 |
| **12.12.2012** | 1 | 10 | 1 | 10 |
| **18.12.2012** | 1 | 10 | 1 | 10 |

Between 09.10.12 and 31.10.12, it was a higher significant increase (p = 0.01) in the ATPase in the test group, while the control group had lower significant increase in ATPase (p = 0.05). Similarly between the sampling points 20.11.12 and 04.12.12. Between 20.11.12 and 04.12.12, there was significant increase in the ATPase in the control group within the 95% confidence intervals (p = 0.05), whereas the test group did not have significant increase in ATPase within the 95% confidence interval (p = 0.05). Between the 04.12.12 and 18.12.12, both groups have a p-value that is quite similar (p = 0.01), but only the control group has significant increase in ATPase within the 99% confidence interval. Test group has significant increase between the sampling points within the 95% confidence intervals (p = 0.05). Moreover, we see that the test group has significant increase (p = 0.01) in ATPase between 12.12.12 and 18.12.12, while the control group does not have significant increase neither within the 95 or 99% confidence intervals (p = 0.05 and 0.01). Table 16 provides an overview of the theme.

**Table 16: Significant change between two sample points for the ATPase within a group (p = 0.05 or p = 0.01). These are then compared between the control group and test group. Other comparisons between the sampling points in the control and test group, gave no such difference in the observed significance.**

| **Overall results. Average** | | | | | | | | | |
|---|---|---|---|---|---|---|---|---|---|
| **Control diet b** | | | | | **Test diet 2** | | | | |
| **Atpase** | | **P value** | **Sig 95% Cl** | **Sig 99% Cl** | **Atpase** | | **P value** | **Sig 95% Cl** | **Sig 99% Cl** |
| 09.10.2012 | 31.10.2012 | 0,03 | Yes | No | 09.10.2012 | 31.10.2012 | 0,00 | Yes | Yes |
| 20.11.2012 | 04.12.2012 | 0,05 | Yes | No | 20.11.2012 | 04.12.2012 | 0,00 | Yes | Yes |
| 20.11.2012 | 12.12.2012 | 0,01 | Yes | No | 20.11.2012 | 12.12.2012 | 0,06 | No | No |
| 04.12.2012 | 18.12.2012 | 0,01 | Yes | Yes | 04.12.2012 | 18.12.2012 | 0,01 | Yes | No |
| 12.12.2012 | 18.12.2012 | 0,11 | No | No | 12.12.2012 | 18.12.2012 | 0,04 | Yes | No |

### Na+-K+-ATPase enzyme activity in gill tissue in each replicate

Diagram 20 shows the development of the Na +-K +-ATPase enzyme activity in gill tissue in replicate 1, when use of test diet 2, compared with control diet b.

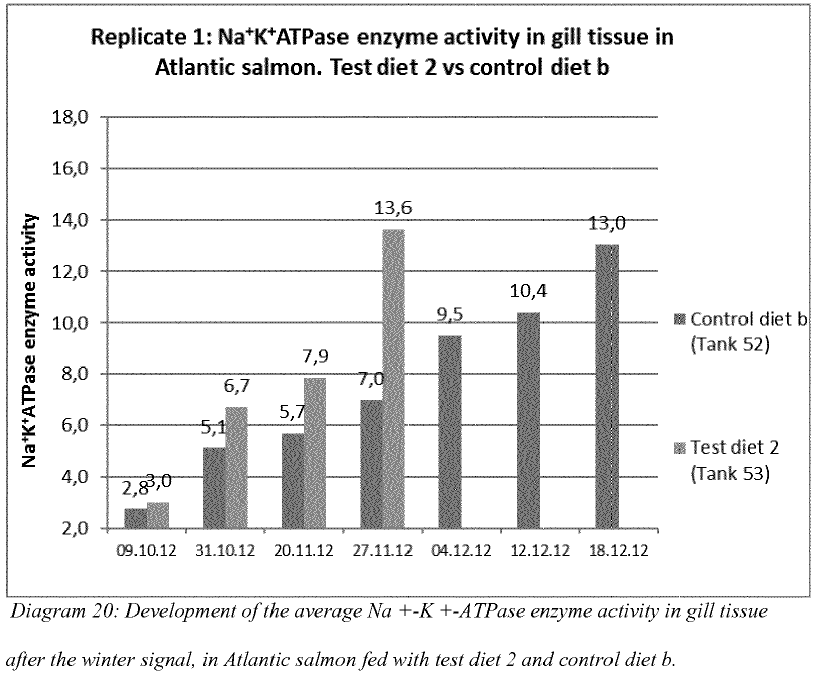

Between 09.10.12 and 31.10.12, there was significant increase (p = 0.01) in the ATPase in the test group, while the control group only had significant increase in ATPase within the 95% confidence interval (p = 0.05). Between sampling points 31.10.12 and 27.11.12, as well as between 20.11.12 and 27.11.12, there was significant increase within the 99% confidence interval in the test group, while the control group did not have any significant increase. Table 17 provides an overview of the theme.

**Table 17: Significant change between two sample points for the ATPase within a group (p = 0.05 or p = 0.01). These are then compared between the control group and test group. Other comparisons between the sampling points in the control and test group, gave no such.**

| **Replicate 1** | | | | | | | | | |
|---|---|---|---|---|---|---|---|---|---|
| **Control diet b** | | | | | **Test diet 2** | | | | |
| **ATPase** | | **P value** | **Sig 95% Cl** | **Sig 99% Cl** | **ATPase** | | **P value** | **Sig 95% Cl** | **Sig 99% Cl** |
| 09.10.2012 | 31.10.2012 | 0,02 | Yes | No | 09.10.2012 | 31.10.2012 | 0 | Yes | Yes |
| 31.10.2012 | 27.11.2012 | 0,1 | No | No | 31.10.2012 | 27.11.2012 | 0 | Yes | Yes |
| 20.11.2012 | 27.11.2012 | 0,22 | No | No | 20.11.2012 | 27.11.2012 | 0 | Yes | Yes |

Diagram 21 shows the development of the Na +-K +-ATPase enzyme activity in gill tissue in replicate 2a, when use of test diet 2 and compared with control diet b.

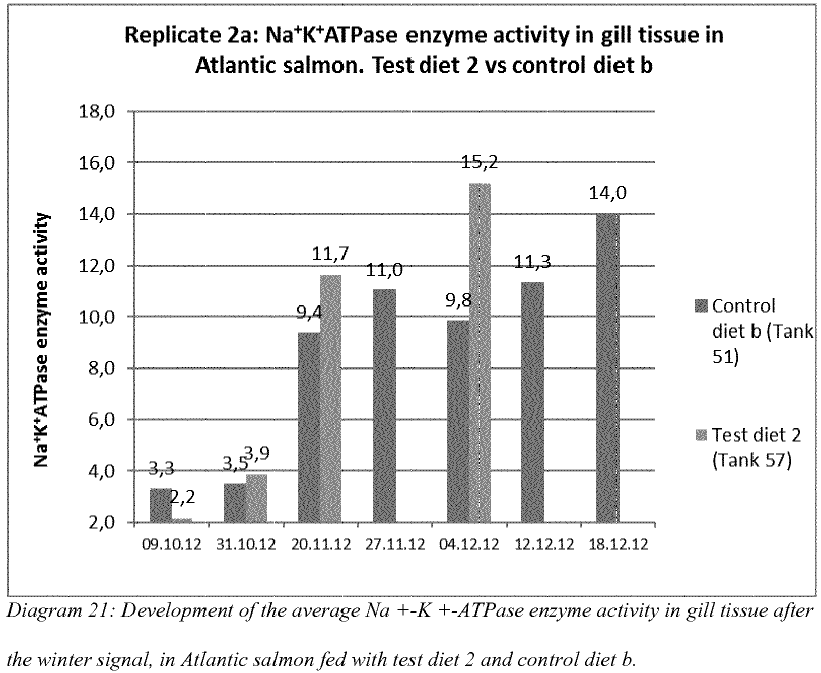

Between 09.10.12 and 31.10.12, there was significant increase (p = 0.05) in the ATPase in the test group, while the control group had no significant increase in ATPase (p = 0.05). Similarly between the sampling points 20.11.12 and 04.12.12. Table 18 provides an overview of the theme.

**Table 18: Significant change between two sample points for the ATPase within a group (p = 0.05 or p = 0.01). These are then compared between the control group and test group. Other comparisons between the sampling points in the control and test group, gave no such difference in the observed significance.**

| **Replicate 2a** | | | | | | | | | |
|---|---|---|---|---|---|---|---|---|---|
| **Control diet b** | | | | | **Test diet 2** | | | | |
| **ATPase** | | **P value** | **Sig 95% Cl** | **Sig 99% Cl** | **ATPase** | | **P value** | **Sig 95% Cl** | **Sig 99% Cl** |
| 09.10.2012 | 31.10.2012 | 0,75 | No | | 09.10.2012 | 31.10.2012 | 0,02 | Yes | |
| 20.11.2012 | 04.12.2012 | 0,76 | No | | 20.11.2012 | 04.12.2012 | 0,03 | Yes | |

Diagram 22 shows the development of the Na +-K +-ATPase enzyme activity in gill tissue in replicate 2b, when use of test diet 2, compared with control diet b.

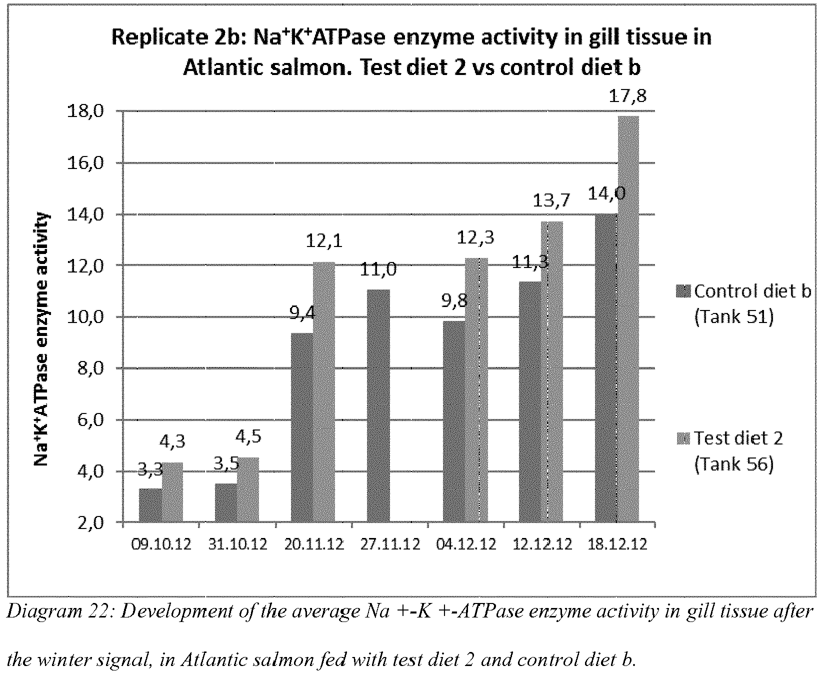

Between 20.11.12 and 18.12.12, there was significant increase within the 99% confidence interval (p = 0.01) in the ATPase in the test group, while the control group had a significant increase in ATPase within the 95% confidence interval (p = 0.05). For the sampling points 12.12.12 and 18.12.12 the test group had significant increase within the 95% confidence interval (p = 0.05), whereas there was no significant increase in the control group (p = 0.05). Table 19 provides overviews of the topic.

**Table 19: Significant change between two sample points for the ATPase within a group (p = 0.05 or p = 0. 01). These are then compared between the control group and test group. Other comparisons between the sampling points in the control and test group, gave no such difference in the observed significance.**

| **Replicate 2b** | | | | | | | | | |
|---|---|---|---|---|---|---|---|---|---|
| **Control diet b** | | | | | **Test diet 2** | | | | |
| **ATPase** | | **P value** | **Sig 95% Cl** | **Sig 99% Cl** | **ATPase** | | **P value** | **Sig 95% Cl** | **Sig 99% Cl** |
| 20.11.2012 | 18.12.2012 | 0,01 | Yes | No | 20.11.2012 | 18.12.2012 | 0 | Yes | Yes |
| 12.12.2012 | 18.12.2012 | 0,11 | No | No | 12.12.2012 | 18.12.2012 | 0,04 | Yes | No |

### Number of copies of the alpha 1a mRNA (freshwater ATPase) related to water temperature.

Sampling only performed in the test group, which received test diet 2. It was analyzed for the number of copies of the alpha 1a mRNA, (freshwater ATPase). Diagram 23 shows the share of these samples that are below the limit value for seawater tolerance, 1186 000 copies of the alpha 1a mRNA. The diagram also shows the water temperature in the same period. The first two weeks, water temperature was above 6 °C. After 2 weeks of feeding, 83 and 100% of the samples were below the limit of seawater tolerance. This share was decreasing further through the smoltification process, congruent with the decreasing water temperature.

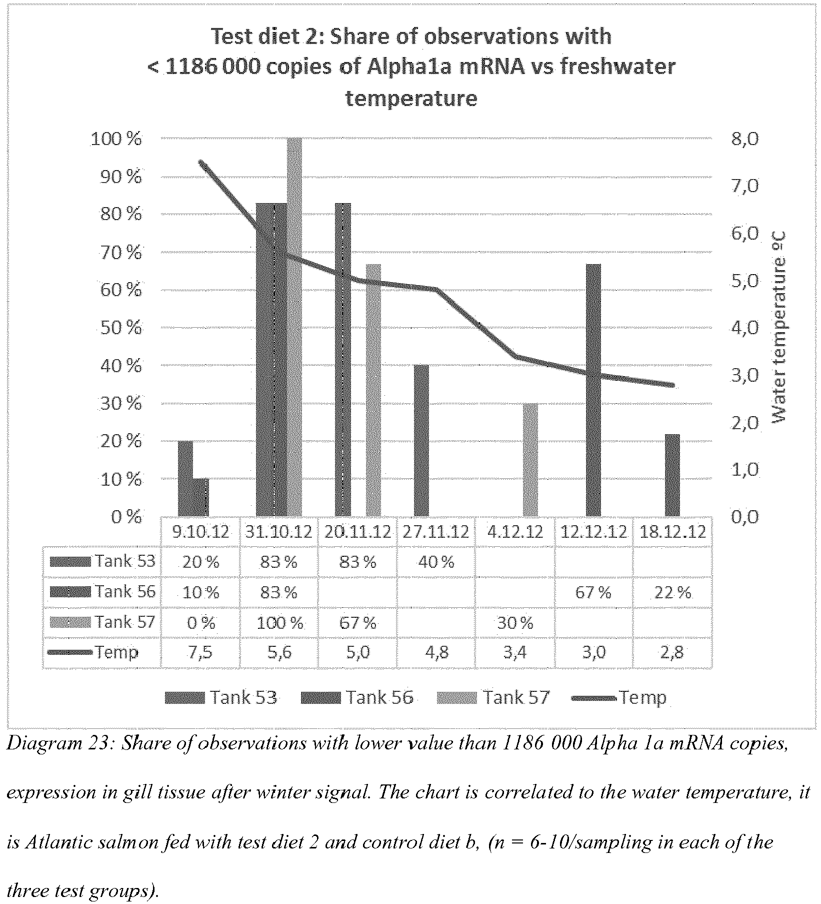

### Smolt index

Diagram 24 shows the development in smolt index in field trial 5, when use of test diet 2, compared this with the control diet b. The results are the average of sampling from the 3 tanks in the test and 2 tanks in the control. Table 14 gives an overview of the number of tanks, and the number of fish, at each sampling points.

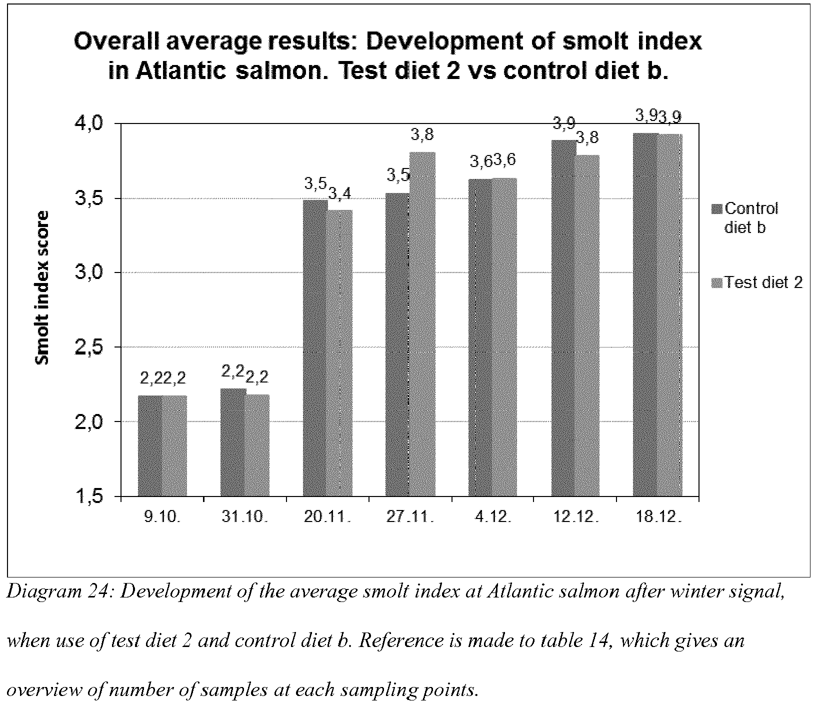

Between 20.11.12 and 12.12.12, there was significant increase in the smolt index within the 99% confidence interval (p = 0.01) in the control group, while the test group in the same period had significant increase in smolt index within the 95% confidence interval (p = 0.05). Between 04.12.12 and 12.12.12, there was significant increase in the smolt index within the 99% confidence interval (p = 0.01) in the control group, while the test group in the same period had no significant increase in the smolt index within the 95% confidence interval (p = 0.05). Table 20 provides the overview of the theme.

**Table 20: Significant change between two sample points for the smolt index within a group (p = 0.05 or p = 0.01). These are then compared between the control group and test group. Other comparisons between the sampling points in the control and test group, gave no such difference in the observed significance.**

| **Overall results. Average.** | | | | | | | | | |
|---|---|---|---|---|---|---|---|---|---|
| **Control diet b** | | | | | **Test diet 2** | | | | |
| **Smolt index** | | **P value** | **Sig 95% Cl** | **Sig 99% Cl** | **Smolt index** | | **P value** | **Sig 95% Cl** | **Sig 99% Cl** |
| 20.11.2012 | 12.12.2012 | 0,00 | Yes | Yes | 20.11.2012 | 12.12.2012 | 0,02 | Yes | No |
| 04.12.2012 | 12.12.2012 | 0,00 | Yes | Yes | 04.12.2012 | 12.12.2012 | 0,33 | No | No |

### Chloride in the blood plasma offish in the seawater challenge test.

In this trial, it t was not carried out seawater challenge test.

### Ions in the blood plasma of fish in fresh water

In this trial, there was no sampling for the analysis of ions in the blood plasma

### Mortality rate in fresh water and seawater

It was not observed any abnormal mortality in fresh water. Neither, there was no observation of fish with the disease HSS. Overview of mortality for the seawater production are listed in table 21, for those tanks that could be traced back to the use of test and control diet in fresh water.

**Table 21: Overview of mortality in seawater after transfer, for part of the experimental material in fresh water.**

| | **Test diet 2 fresh water** | **Control diet b freshwater** | **% difference from control diet b** |
|---|---|---|---|
| | **Cage 5 in seawater** | **Cage 9 in seawater** | |
| | **Tank 53 freshwater** | **Tank 52 freshwater** | |
| **% mortality after 30 days post transfer to seawater.** | 0,07 | 0,12 | 41,7 |
| **% mortality after 60 days post transfer to seawater.** | 0,16 | 0,45 | 64,4 |
| **% mortality after 90 days post transfer to seawater.** | 0,32 | 1,12 | 71,4 |

### Field trial 6

### Na+-K+-ATPase enzyme activity in gill tissue

Diagram 25 shows the development of the Na +-K +-ATPase enzyme in gill tissue in field trial 6, when use of test diet 2, compared with control diet b, which is growth feed for juveniles produced by Ewos AS. The results are the average of sampling from one cage in the fresh water in the test (n = 20/sampling), vs one cage in fresh water as the control (n = 20/sampling). The experiment is a comparison of two production methods, as the fish in the test group receiving continuously light and test diet 2, while the fish in the control group receive the classic photo manipulation (first winter signal, followed by summer signal) in combination with the control diet b (ordinary growth feed).

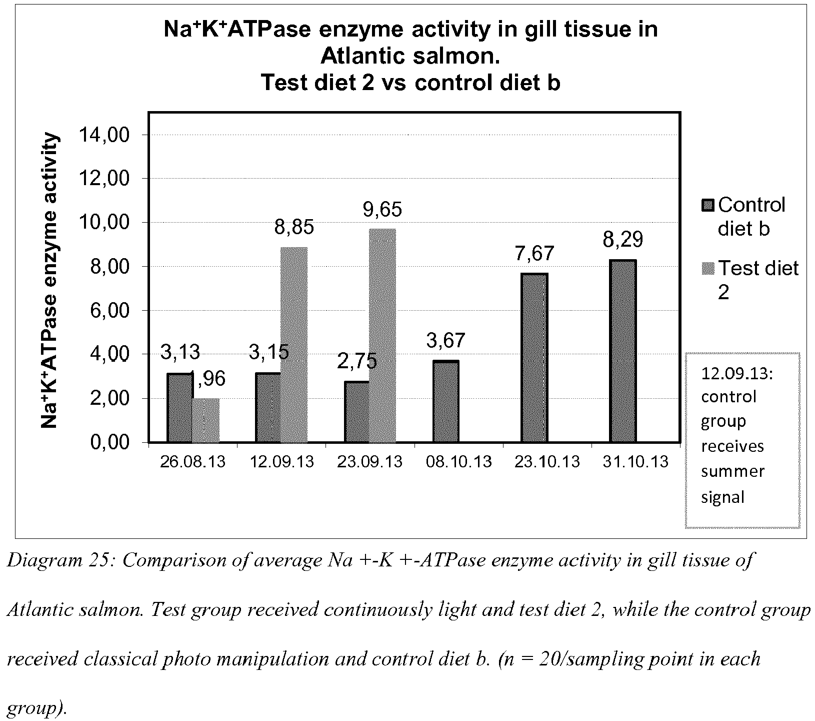

The highest measured average ATPase value came about 5 weeks earlier in the test group than in the control group. Test group reacts with the significant increase (p = 0.01) in ATPase, two weeks after it has received the test diet 2. The control group responded with a significant increase (p = 0.01) in ATPase 6 weeks after it received the summer signal. Table 22 provides an overview.

**Table 22: Significant change between two sample points for the ATPase within a group (p = 0.05 or p = 0.01).**

| **Control diet b** | | | | | **Test diet 2** | | | | |
|---|---|---|---|---|---|---|---|---|---|
| **ATPase** | | **P value** | **Sig 95% Cl** | **Sig 99% Cl** | **ATPase** | | **P value** | **Sig 95% Cl** | **Sig 99% Cl** |
| 26.08.13 | 12.09.13 | 0,97 | No | No | 26.08.13 | 12.09.13 | 0,00 | Yes | Yes |
| 26.08.13 | 23.09.13 | 0,24 | No | No | 27.08.13 | 23.09.13 | 0,00 | Yes | Yes |
| 26.08.13 | 08.10.13 | 0,34 | No | No | | | | | |
| 26.08.13 | 23.10.13 | 0,00 | Yes | Yes | | | | | |
| 26.08.13 | 31.10.13 | 0,00 | Yes | Yes | | | | | |
| 12.09.13 | 23.09.13 | 0,32 | No | No | 12.09.13 | 23.09.13 | 0,30 | Yes | Yes |
| 12.09.13 | 08.10.13 | 0,39 | No | No | | | | | |
| 12.09.13 | 23.10.13 | 0,00 | Yes | Yes | | | | | |
| 12.09.13 | 31.10.13 | 0,00 | Yes | Yes | | | | | |
| 23.09.13 | 08.10.13 | 0,12 | No | No | | | | | |
| 23.09.13 | 23.10.13 | 0,00 | Yes | Yes | | | | | |
| 23.09.13 | 31.10.13 | 0,00 | Yes | Yes | | | | | |
| 08.10.13 | 23.10.13 | 0,00 | Yes | Yes | | | | | |
| 08.10.13 | 31.10.13 | 0,00 | Yes | Yes | | | | | |
| 23.10.13 | 31.10.13 | 0,59 | No | No | | | | | |

### The number of copies of the alpha 1a mRNA (freshwater ATPase)

Sampling for the analysis of the number of copies of alpha 1a mRNA (fresh water ATPase), was performed. The results revealed in diagram 26. This shows that the test diet 2 combined with continuously light, gives a lower expression of freshwater ATPase, compared with the control diet b and classic photo manipulation. For test diet 2 we see a reduction in the number of copies of the alpha 1a mRNA from 6.07 million in the first sampling, to 0.75 million copies in the last sampling, clearly below the limit value for seawater tolerance on 1,186 million copies. The differences between the sampling points in the test group are significant within the 99% confidence interval (p = 0.01), and coincides with the increase in ATPase enzyme activity.

The use of control diet b provides an increase in the number of copies, from 2.49 million by the first sampling, to 2.98 million copies at the last sampling. Lowest average value was registered 23.10.13, with 1.76 million copies, coinciding with a significant increase in ATPase enzyme activity. The decrease between 26.08.13 and 23.10.13 is within the 99% confidence interval (p = 0.01), whereas the decrease from 12.09.13 (which is the start of the summer signal) to the 23.10.13 not significantly (p = 0.05). Table 23 provides overviews of the topic.

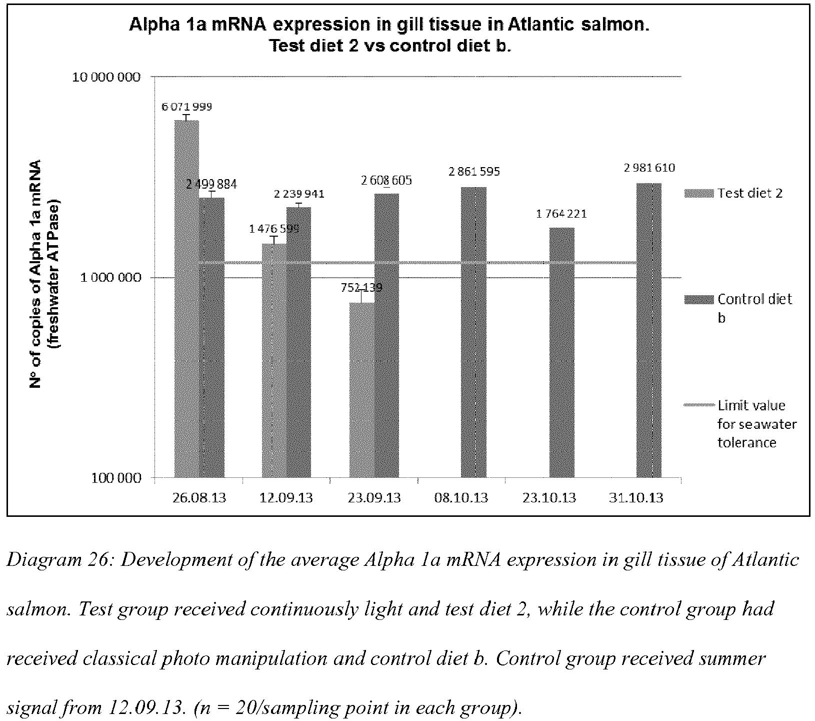

**Table 23: Significant change between two sample points for the number of copies of the alpha 1a mRNA within a group (p = 0.05 or p = 0.01).**

| **Control diet b** | | | | | **Test diet 2** | | | | |
|---|---|---|---|---|---|---|---|---|---|
| **mRNA** | | **P value** | **95 % Cl** | **99 % Cl** | **mRNA** | | **P value** | **Sig 95% Cl** | **Sig 99% Cl** |
| 26.08.13 | 12.09.13 | 0,00 | Yes | Yes | 26.08.2013 | 12.09.2013 | 0,00 | Yes | Yes |
| 26.08.13 | 23.09.13 | 0,04 | Yes | No | 26.08.2013 | 23.09.2013 | 0,00 | Yes | Yes |
| 26.08.13 | 08.10.13 | 0,07 | No | No | | | | | |
| 26.08.13 | 23.10.13 | 0,00 | Yes | Yes | | | | | |
| 26.08.13 | 31.10.13 | 0,09 | No | No | | | | | |
| 12.09.13 | 23.09.13 | 0,09 | No | No | 12.09.2013 | 23.09.2013 | 0,00 | Yes | Yes |
| 12.09.13 | 08.10.13 | 0,02 | Yes | No | | | | | |
| 12.09.13 | 23.10.13 | 0,09 | No | No | | | | | |
| 12.09.13 | 31.10.13 | 0,00 | Yes | Yes | | | | | |
| 23.09.13 | 08.10.13 | 0,64 | No | No | | | | | |
| 23.09.13 | 23.10.13 | 0,00 | Yes | Yes | | | | | |
| 23.09.13 | 31.10.13 | 0,36 | No | No | | | | | |
| 08.10.13 | 23.10.13 | 0,00 | Yes | Yes | | | | | |
| 08.10.13 | 31.10.13 | 0,67 | No | No | | | | | |
| 23.10.13 | 31.10.13 | 0,00 | Yes | Yes | | | | | |

### Smolt index

Diagram 27 shows the development of the smolt index in the field trial 6. The results are the average of the sampling from one cage in freshwater as the test (n = 20/sampling), vs one cage in freshwater as the control (n = 20/sampling).

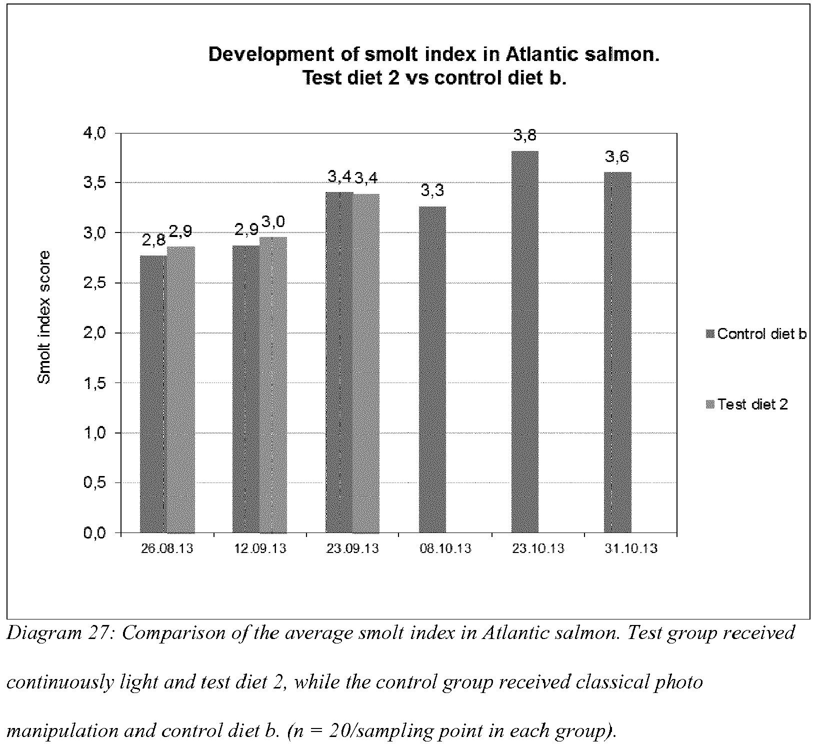

Both the test group and control group have significant increase in smolt index within the 99% confidence interval (p = 0.01) between the sampling points 26.08.13 and 23.09.13. Test group was transferred to the seawater after 23.09.13, while the control group was transferred to the seawater five weeks after the test group. During this period, there are observations of several significant increases in smolt index between a numbers of sampling points in the control group. Table 24 provides an overview of the theme.

**Table 24: Significant change between two sample points for the smolt index within a group (p = 0.05 orp = 0.01).**

| **Control diet b** | | | | | **Test diet 2** | | | | |
|---|---|---|---|---|---|---|---|---|---|
| **Smolt index** | | **P value** | **95 % Cl** | **99 % Cl** | **Smolt index** | | **P value** | **95 % Cl** | **99% Cl** |
| 26.08.13 | 12.09.13 | 0,37 | No | No | 26.08.13 | 12.09.13 | 0,48 | No | No |
| 26.08.13 | 23.09.13 | 0,00 | Yes | Yes | 26.08.13 | 23.09.13 | 0,00 | Yes | Yes |
| 26.08.13 | 08.10.13 | 0,11 | No | No | | | | | |
| 26.08.13 | 23.10.13 | 0,00 | Yes | Yes | 12.09.13 | 23.09.13 | 0,00 | Yes | Yes |
| 26.08.13 | 31.10.13 | 0,00 | Yes | Yes | | | | | |
| 12.09.13 | 23.09.13 | 0,00 | Yes | Yes | | | | | |
| 12.09.13 | 08.10.13 | 0,25 | No | No | | | | | |
| 12.09.13 | 23.10.13 | 0,00 | Yes | Yes | | | | | |
| 12.09.13 | 31.10.13 | 0,00 | Yes | Yes | | | | | |
| 23.09.13 | 08.10.13 | 0,15 | No | No | | | | | |
| 23.09.13 | 23.10.13 | 0,00 | Yes | Yes | | | | | |
| 23.09.13 | 31.10.13 | 0,15 | No | No | | | | | |
| 08.10.13 | 23.10.13 | 0,00 | Yes | Yes | | | | | |
| 08.10.13 | 31.10.13 | 0,03 | Yes | No | | | | | |
| 23.10.13 | 31.10.13 | 0,15 | No | No | | | | | |

### Chloride in the blood plasma of fish in the seawater challenge test.

In this trial, it t was not carried out seawater challenge test.

### Ions in the blood plasma of fish in fresh water

In this trial, there was no sampling for the analysis of ions in the blood plasma

### Mortality rate in fresh water and seawater

It was not observed any abnormal mortality in fresh water. Neither, there was no observation of fish with the disease HSS. Table 25, gives an overview of mortality for the seawater production.

**Table 25: Overview of mortality in seawater post transfer from freshwater.**

| | **Test diet 2 freshwater** | **Control diet b freshwater** | |
|---|---|---|---|
| | **Cage *On 01* in seawater** | **Cage *5 and 10* in seawater** | **% difference from control diet b** |
| **% mortality 30 days post transfer to seawater (accumulated)** | 0,15 % | 1,43 % | 89,5 % |
| **% mortality 60 days post transfer to seawater (accumulated)** | 0,18 % | 1,61 % | 88,8 % |
| **% mortality 90 days post transfer to seawater (accumulated)** | 0,25 % | 1,69 % | 85,2 % |

### Discussion

### Choice of method and evaluation of smoltification process

The presence of the CaSR in the various organs associated with the osmoregulation and endocrine activity related to the smoltification process, has been demonstrated in the SuperSmolt ® method , and it is known how to influence the activity of these cells by use of ions and amino acids that stimulate the CaSR. The SuperSmolt ® method also provides increase in Na⁺-K⁺-ATPase enzyme activity, increase in smolt index, smolt behavior in fresh water, normal osmoregulation in seawater (34 ‰), and good survival (1% mortality < after 30 days) and growth in sea-water production. All of these are traditional parameters in order to assess whether or not the fish is smoltified satisfactory, or not. Experience from 2002 to 2014, with more than 300 million supersmoltified salmon, supports that this method employing the addition of salts to the operating water works can function as a smoltification process.

In assessing the effectiveness of the fish feed and method of the present invention, an approach has been applied that is similar to the approach used to evaluate the effectiveness of the SuperSmolt ® method, utilizing the knowledge related to the CaSR, combined with traditional smoltification parameters.

In three of the six field experiments, test feeds are used in combination with traditional photo manipulation. In these cases, we have to assume that the fish has an endocrine activity corresponding to a normal smoltification process. For the rest of the experiments, continuous light or natural light is employed after the autumnal Equinox, both conditions representing a challenge to get a satisfying smoltification process, and ability to normal osmoregulation, survival and growth after transfer to seawater.
When using the term "smoltification" related to the use of test diet 2, this implied that the endocrine activity in the experimental material is not examined, but lean to the changes in the traditional smolt parameters. Thus, the nature of the work has a practical approach to smoltification in smolt production, more than a complete survey of the physiological factors related to the actual smoltification process.

### The effect of test diet 1 and 2 on the smoltification process, compared with classical photo manipulation

In field trial 1, test diet 1 is used in combination with the ordinary photo manipulation, while in the field trials 2 and 5, test diet 2 is used in combination with ordinary photo manipulation.

### Field trial 1:

The test diet 1 gave no significant increases in Na⁺-K⁺-ATPase enzyme activity, and similarly in the control group. Similar results were observed for the increase of the smolt index. There was no observation of significant changes in plasma chloride, after 96 hours seawater challenge test in 35‰ seawater. Both the control group and the test group were within the normal range of plasma chloride, 120-150 mmol/l. However, observation of fish that received test diet 1 in the smoltification period, had on average, more than 20 times higher mortality associated with the disease HSS, compared with the control group. The experiments, carried out at the water temperature 3-5 °C, which should give an average dietary uptake of 0.2-0.4% daily, for this sized fish (Skretting feed table, 2009).

However, the feed intake is large enough to observe increased mortality in the test group, and it is not likely that an increased water temperature, with increased feed intake, should be beneficial for survival in the test group. Overall, the observations provide the basis to argue that test feed 1 alone is not a suitable diet to stimulate the smoltification process in salmonids. Test diet 1 is the type of feed used in the SuperSmolt ® method, but in combination with Ca²⁺ and Mg²⁺ added to the operating water.

### Field trial 5:

Test diet 2, was used in field trial 5. In this experiment, the water temperature was between 8-6 °C the first two weeks in the smoltification process (after the given summer signal), then the water temperature first dropped to the 4° C, then 3 °C. The temperature drop considered as an environmental signal, which hampers the smoltification process. Decreasing water temperature resulted in reduced feed uptake, but it looks like the first two weeks with the highest water temperatures and relatively high feed intake of the test diet 2, has been critical of how the smoltification process ran. The increase in ATPase enzyme activity was significantly stronger between sampling points, early in the smoltification process, in fish that received test diet 2 (significantly within the 99% confidence interval), compared with the control group (significantly within the 95% confidence interval). Smolt index did not show the corresponding increase in favor of test diet 2. Smolt index score is to some extent subjective evaluated and variation in the scores between the different samplers at the host hatchery may have played in. Sample material in the latter part of the smoltification period was also limited (n = 10) in each group. Smolt index is rarely used to decide the time of transfer to seawater, but is more of an additional parameter in the smoltification process.

Due to satisfying smolt status in fish which received test diet 2, test group in replicates 1 and 2a transferred to seawater, respectively 3 and 2 weeks earlier, than the control groups. Test group in replicate 2b, was transferred at the same time as the control group. However, based on the ATPase values, transfer to seawater of the test group was possible 4 weeks before the control fish.

Percentage share of samples of alpha 1a mRNA (freshwater ATPase) in the test group, with a lower value than 1.186 mill copies, increases significantly from the startup and to second sampling point (about 2 weeks) (diagram 23). This is a period with a water temperature of 6 °C. As the water temperature drops, the percentage share of fish with the alpha 1a mRNA (freshwater ATPase) less than 1.186 million copies, decrease a well. This observation can be directly related to the feed intake of the fish, as declining water temperature will give reduced feed intake. At the same time, we see that test diet 2 gives the extra stimulus for the fish in the test group, revealed as an extra boost in the ATPase enzyme production, compared to the control group.

In practical farming, late autumn transfers can be problematic in relation to achieving satisfactory size of the fish in the sea before the winter season. Such fish are more prone to winter wounds, than fish that have come in the sea earlier in the fall. Early autumn transfers allows to a greater extent, to utilize the higher seawater temperatures early in the fall, and how to get higher growth rates and reduced production time from transfer to slaughter. Late autumn transfers, correlated to the declining fresh water temperature and difficulties with the smoltification process, is common in smolt production. Test diet 2 is a tool to achieve the earlier transfer time, on the falling water temperatures in the autumn.

The mortality rate in seawater, respectively, 30, 60 and 90 days after post transfer, was satisfactory for both the test group and the control group. However, the fish that had been given test diet 2 in freshwater, had lower mortality rates than the control group. The longer time in seawater, the larger percentage difference in mortality occurred. Smolt status can have impact on survival in seawater, and there is an increased risk for secondary problems associated with poor osmoregulation capability. Furthermore, these results support that the test diet 2 is safe in use, and not negatively interferes with the production.

### Field trial 2:

Field trial 2, was conducted on rainbow trout. This fish had received winter signal by using natural light in winter in the southern hemisphere (before the spring Equinox). After this received extra light, which served as the summer signal. Test diet 2, was used as an additional stimuli in the summer signal period. It is not usual to talk about a smoltification process in rainbow trout, but it is a fact that the rainbow trout must respond with the same physiological responses as salmon, when transferred to seawater. A preadaptation in freshwater, before transfer the fish to seawater, seems as a wise strategy to reduce osmoregulation stress in rainbow trout. Test group shows one week earlier significant increase in ATPase enzyme activity, compared with the control group.

The hatchery had a procedure with grading out the smallest fish in a fish group, before delivery to the sea. This practice stresses the fish and cause fall in the ATPase enzyme activity, thus confirming previously experience. Both the test group, and control group responded with a numerical reduction in the ATPase enzyme amount after the stressor. However, only the control group have a fall in ATPase, which is significant within the 99% confidence interval. The fall in the ATPase enzyme activity in the test group is not significant. Increase in ATPase last week before transfer to seawater in the control group is not significant, but can be consider as a possible recovery after the stressor. Rainbow trout are exposed to emaciation (pin heads) the first time after the transfer to the sea. Such fish can survive for a long period in the seawater, but eat poorly and does not grow normally. They are not easily to remove from the cage; normally they follow the production all the way to harvest time. Then all fish are counted, and the real number of the pinhead problem reveals. This disease condition is not fully understood. However, it is assumed that poor osmoregulation in seawater is a major factor. In this field trial, the mortality rate in seawater 60 days post transfer, was satisfying in both test and control group, but the lowest mortality was observed in the test group.

Field trial 2 indicates that the test diet 2 is a tool for better preadaptation of Rainbow trout to a life in seawater, compared to the traditional production method.

### The effect of test diet 2 on the smoltification process without use of photo manipulation, as well as the effect of test diet 2 on desmoltification.

Field trials 3, 4, and 6 are experiments carried out without the use of photo manipulation in the smoltification process.

### Field trial 3

The fish in field trial 3, placed in a tank outside the hatchery building, was exposed for continuously artificial light. Then the fish was moved indoors, and continue to receive artificial light 24 hour/day. The experiment was carried out while the fish was indoors. Continuously light is normally insufficient to achieve a satisfying smoltification process, but it is known that such conditions combined high water temperature (> 8 ° C), can provide the fish with high ATPase enzyme activity in the gills. Such fish can perform with normally osmoregulation in seawater. However, such groups of fish often perform with an inhomogeneous smolt status within the group, unsuitable for transfer to the sea.

One aspect that may be of importance is that the fish stood out in August and September under a dark night sky. This might been perceived as a winter signal, despite the supply of a relatively modest amount of light from artificial added light in the tank, compared with the darkness of the night sky. When transferring to the hatchery in house and continuously stable light conditions without variation, the stimulus has been perceived as the summer signal in the fish. Likely, it has contributed to a smoltification process. Regardless of lighting conditions, it is with reasonable certainty, that this fish has received a suboptimal light management regime, compared with what is standard for light management of smolt.

Test diet 2 provides earlier and higher ATPase enzyme activity, compared with the control group. This is valid throughout the experimental period of 11 weeks. There is significant increase in the test group early in the smoltification process (between the first and third sampling points), while the only significant change in the control group is the fall in the ATPase between the third and fourth sampling point. For test diet 2, there is a corresponding ATPase response as the one observed in the field trials 2 and 5.

Further, we see that smolt index in the test group increases significantly between the first and second sampling points, while the control group did not have any significant change. Between the second and third sampling points there is stronger significant increase in the test group (within the 99% confidence interval), than in the control group (within the 95% confidence interval). In this case, the increase in the smolt index in the test group, appear earlier than the control group and coincides with the increase in ATPase enzyme activity. Assessment of smolt index is done by the same person each sampling time (with the exception of the first sampling) and the data material is 3 times larger than in field trial 5 (n = 30 vs. n = 10). This strengthen this observation, when compared with the missing effect test diet 2, apparently had on smolt index in field trial 5.

In the materials that were analyzed for the number of copies of the alpha 1a mRNA (freshwater ATPase) we see that the share of tests that have lower numbers than 1,186 million copies, are virtually stable throughout the experimental period of 11 weeks, compared with the control group (Chart 11). Unfortunately, there are no startup sampling in the experiment, but the second sampling of replicate 2, indicates the high number of copies before the start of the trial. In contrast to field trials 5, which had falling water temperature below 6 ° C, we have here a stable water temperature between 8.3-8.9 ° C. The water temperature has influence on feed uptake, and at 8 °C feed intake are stable, something not achieved in a field trial 5. It is reasonable to assume that this is of significant importance for the stable percentage share of samples, that has a lower value than 1,186 million copies of alpha 1a mRNA (the limit value for seawater tolerance). This result seems directly connected to the intake of test diet 2, and cannot be achieved with the use of common growth feed. This illustrates that it will be possible to keep the fish in the smolt window, while it remain in fresh water over a longer period. This has its specific application in practical smolt production, by the fact that the fish do not desmoltify, followed by a synchronized smolt status in the entire fish population in the tank. This aspect is significant for growth and survival in seawater, but also provides a flexible transfer time of the smolt to seawater. Given a proper water temperature, water environment and good fish health, it will probably be possible to produce a post smolt (1-2 kg) in fresh water for delivery to marine facilities, or production of salmon in fresh water right up to harvest size (> 2 kg).

We see that the control group through the experimental period had significant increase and decrease in freshwater ATPase, whereas the test group did not have any significant changes. This is probably due to the fact, that the first sampling point is missing for both replicates 1 and 2 for this type of analysis, and that the test diet 2, keeps the fish at a stable low level of freshwater ATPase (chart 9 and 10). However, the control group reduces the level of freshwater ATPase to about the same level as the test group after 11 weeks in the experiment. This may be because the fish have gone into a smoltification process that has taken about 654 day° from the time the fish was moved in house of the hatchery (the supposed starting of summer signal). Normally, the fish reach the smolt window after 350 day° at summer signal. Comparing ATPase enzyme activity with freshwater ATPase in the same period, we see that ATPase enzyme activity is 7.7 in the control group, while the test group has 9.2 at the last sampling. The level of the control group indicates desmoltification, alternatively the fish have been exposed to a negative environmental impact and in such cases, it is common with a significant decrease in ATPase enzyme activity. Freshwater ATPase levels do not support a desmoltification, rather the opposite. The most likely reason for the drop in ATPase enzyme activity, is a stressor. Such a stressor can be high density in small experimental tanks. This is a similar observation as observed when grading the Rainbow trout in field trials 2, where fish fed with test diet 2, maintains higher ATPase despite the added stressor, compared with the control group.

There was no transfer to seawater for further production, of the fish in field trial 3. However, a seawater challenge test was performed before destruction of the fish group. This test shows satisfactory plasma chloride levels (120-150 mmol/l) in both the control group and test group (diagram 14). We see that the trend in the material from the control group in a major way shows that the size of the fish affects the level of plasma chloride positive, compare to what observed in the test group (diagram 13). This is an observation that support that test diet 2 enhances the fish's ability for osmoregulation in seawater.

### Field trial 4

Field trial 4, is carried out under the falling water temperature and on the falling day length after the autumnal Equinox. The fish are getting more darkness than light exposure through the day, and the proportion of darkness every day during the test period, is increasing. Both water temperature and reduced day length is negative signals for the smoltification process. There is a significant increase within the 99% confidence interval in the ATPase enzyme activity in fish fed with test diet 2, while control fish do not have any significantly change in ATPase enzyme activity. For test diet 2, these findings are similar to the one observed in field trial 3.
There is a significant increase in the smolt index between the first and last sampling in fish fed with test diet 2, while control fish is unmodified in smolt index in the same period. For test diet 2, this is a similar response as observed in the field trials 3.

Samples analyzed for alpha 1a mRNA (freshwater ATPase), shows for test diet 2, a significant decrease in the 99% confidence interval between sampling points. This decline are note observed in the control group. Second sampling in the test group (about 2 weeks after startup) is below the limit value for seawater tolerance, at 1.186 million copies of freshwater ATPase. This response, are observed in field trials 3, as well as in the field trial 5.
While transfer to the seawater, the mortality rate was very low through the entire production, off to harvest.

Overall, this experiment demonstrates that test diet 2 is safe in use in ordinary production, as well as that it shows the effect on smoltification, despite the absence of common smoltification signals. In practical farming, fish will receive from time to time incomplete smoltification signals (missing/incomplete winter signal and summer signal), and in such situations, the test diet 2 can be used to compensate for this.

### Field trial 6:

Field trials 6 is carried out with respect to compare two different production methods, continuous light in combination with test diet 2, compared with traditional photo manipulation and ordinary growth feed. This production takes place in the open air, in cages in fresh water. The fish in the test group has received continuously light. In addition, the smoltification process is ended before the autumn Equinox. Thus, the fish gets longer days than night. Fish in the control group received the natural light conditions until 12. of September 2012, and the darkness at night in the period served as winter signal. When exposed to artificial light, this will be perceived as the summer signal in the fish. The main purpose of this experiment is to evaluate whether it is possible to transfer fish to seawater at an earlier stage, compare to what is possible with photo manipulation. In addition, examine the effect of test diet 2 on smoltification, and survival of the fish after transfer to seawater.

The experiment shows that test diet 2 in this case is able to perform transfer of smolt to seawater, 5 weeks prior to photo manipulated smolt production. The main reason for this is that the fish does not get winter signal, and thus can maintain normal feed intake. Thus, the fish reach vaccination size earlier than the fish receiving winter signal. Smoltification is done after the vaccination is carried out. This smolt plant cannot give an artificial winter signal, as it has outside cages in a fresh water lake. The smolt plant have to wait for the sufficient number of days which can give darkness during night (in August and September), and the artificial summer light signal in the smoltification process will be tweaked out in September month, after the winter signal. Between the first and second sampling in the test group, there is a significant increase in ATPase enzyme activity within the 99% confidence interval, while the control group did not have any significant change in the ATPase, in the same period (diagram 25). For test diet 2, this is a similar response as observed in the field trials 3 and 4.

Smolt index had equal development in the test and control group in this experiment. This may be due to both the test group and control group, received more natural day light than it had in a field trial 3, 4 and 5. It is known, that light intensity affects the degree of smolt index. Bright light results in higher smolt index, than the dim light.

Samples analyzed for alpha 1a mRNA (freshwater ATPase) shows for test diet 2, a significant decrease within the 99% confidence interval, between sampling points. This decline looks occurs in the control group as well, between the first and second sampling, but the decline in the test group is numerically greater than in the control group. The decline in the test group is from 6.07 million to 1.48 million copies between the first and second sampling. Comparable, the decrease in the control group is from 2.5 million to 2.23 million copies. Between the second and third sampling points, there is no signify change in the control group, but the test group continues the fall down to 0.75 million copies. The change in the test group corresponds to the one observed in the field trials 3, 4 and 5, but is somewhat delayed compare to the other. This may be due to the high number of copies of the alpha 1a mRNA which was observed at the start in the test group, and that it takes longer time to down regulate this expression. Control group did not come below the limit value for seawater tolerance, 1,186 million copy of alpha 1a mRNA, when transferred to seawater. It is known that the correlation between the ATPase enzyme activity and the alpha 1a mRNA in photo manipulated fish form a u-shaped curve. From the ATPase 1-9, a reduced number of mRNA copies occur, while from the ATPase 9-22, a growing number of mRNA copies occur. Is likely the fish operate with a dual strategy in the area between 9-20 of the ATPase, and manage for both desmoltification in fresh water, and a life in the seawater. These cause difficulties to find the bottom level of the freshwater ATPase when sampling and this might be the case in this experiment. At the same time, we see that the fish do not have more than 8,29 in ATPase enzyme level, and this indicates that it was not ready for sea water at the time of the transfer. Nevertheless, the control group showed good survival and growth in seawater. Then it is likely to believe that the ATPase enzyme activity has been suppressed by a stressor and "liberated" when transfer to seawater.

The mortality rate of fish fed with test diet 2 in freshwater was very low first 8 months in seawater, 0.36% in mortality.

Overall, this experiment shows that test diet 2 is safe in use in regular production, and that the fish can smoltify without use of photo manipulation, only with the help of the test diet 2. However, the experience of this type of production is limited, compared to the use of the SuperSmolt ® method, which combines the use of continuously light. Thus, it is therefore natural to use cautiousness, choose favorable production conditions (high water temperature, healthy fish and good water quality) and win the gradual experience with the described method before it get upsized in use.

### Physiological assessments associated with hemorrhagic smolt syndrome (HSS) in Atlantic salmon, and the use of test diet 2 against HSS

HSS is a disorder that is relatively common during the stage of smoltification in Atlantic salmon. Nylund et al. (2003) associated the disease with viral infection, but no causative agents have been demonstrated. It is also suggested that malnutrition or genetic disease may be possible causes (Rodgers and Richards, 1998). Typically, it is the largest fish that suffer from HSS in a fish group, and it is the fish that have proceed farthest in the smoltification process. Physiological, the smolt in fresh water will actively pump out the Na⁺ and Cl⁻ over the gills, and excrete the Mg²⁺ and Ca²⁺ over the kidneys. If the salmon is at parr stage, it will take up Na⁺, Cl⁻, Ca²⁺, and Mg²⁺ from the environment. HSS problems arise when the fish is a smolt adapted to seawater, but is still in fresh water, and enhanced further when the fish are fed with a lining that increases the drinking rate. Test diet 1 cause increased prevalence of HSS, through providing more than 20 times higher mortality rate than the fish that received ordinary growth feed. Test diet 1 includes only the Na⁺ and Cl⁻, not the free Mg²⁺ and Ca^{2+.} It is likely to assume that the content of 7% NaCl in the feed gives the fish increased drinking rate of fresh water, and enhances an already established increased drinking rate in the fish group. For example, we see that the HSS fish from field trial 1, fed with test diet 1, has 90,5 mmol/l in plasma chloride, while HSS fish fed with control diet has 102.8 mmol/l in plasma chloride. Normal values for plasma chloride in fresh water in healthy fish are between 120-135 mmol/l. This indicates that the secretion of plasma chloride from the fish with HSS, fed with test diet 1, is amplified, in relation to the fish with the HSS fed with growth feed. Plasma chloride in HSS-fish compared to normal fish, is clearly lower, indicating that the increased excretion of the Cl⁻ is a part of the pathological pattern. Probably due to this, the Na⁺-K⁺-ATPase enzyme activity stimulates by the supply of chloride ions, for fish that get extra addition of this in the feed. Fish with HSS have ATPase enzyme values compatible with smolt status (ATPase about 10 or above), matching with good ability to pump the salts out of the body (MultiLab, 2012).

At the same time as the fish actively secretes salts from the body in the kidney and over the gills, the osmotic gradient between fish and water works so that the water flows into the fish and salts out of the fish. The loss of salts through the osmotic gradient comes on top of the fish even actively pumps out the salts. In the kidneys have the fish high diuresis in order to separate out the surplus water, at the same time have lower the ability to reabsorb ions such as Ca²⁺, and Mg²⁺, corresponding to what the salmon does in sea water. Thus, these ions get lost, which is a disadvantage when the fish is in freshwater. It follows that the fish goes into a state of hypocalcemia and hypomagnesaemia. This is illustrated in diagram 4 and 15. Fish with HSS (test and control group) have respectively 1.04 and 1.08 mmol/l in plasma magnesium. Normal value for fresh water from the literature are 2 mmol/l (Jakobsen, 2013), while the fish in the field trials 3 showed 1.44 mmol/l.
Similarly, for the plasma calcium, the reference value from the healthy fish in the field trials 3, is 3.8 mmol/l, while the HSS fish (test and control group) have respectively 2.42 and 2.2 mmol/l. Ca²⁺ and Mg²⁺ is part of the fish's ability to carry out normal muscle contractions. From other species, such as cattle, we know that hypocalcemia/hypomagnesaemia gives muscle weakness, reduced heart rate and lethargy. Supply of calcium and magnesium intravenously may repair this disorder. A look at the clinical picture of the fish with HSS, you can observe lethargy as a typical finding. The fish swims slowly, and this could be interpreted as muscle weakness (in heart and skeletal muscles) because of hypocalcemia/hypomagnesaemia. Empirical experience shows that adding of seawater to the freshwater, reduces or removes this type of mortality. Seawater is very rich in magnesium.
Another important autopsy finding in HSS, is ascites (fluid in the abdominal cavity). If the heart muscle is unable to perform normal contractions and the heart rate decreases, blood fluid obstructed in the blood vessels system. This can cause transudate in the abdominal cavity of the fish, which we see as ascites. In a situation where the fish lacking salts, physiologically are adapted to a life in seawater, but is in fresh water, it will start to drink in order to compensate the loss of salts. This could apply to Ca²⁺, Mg²⁺, as well as Na⁺ or Cl⁻. What was supposed to be seawater (since it is a smolt), is fresh water without salts. This allows the drinking rate to be unstoppable, and it gradually develops a hypervolemia. Typically, a look at the autopsy of the fish with HSS, edema in the skeletal muscles, indicates excess of fluid in the peripheral circulation. Clinically, you can see fish with protruding scales, and it is likely that this is due to edema of the skin/scale cavity, caused by hypervolemia. Another important finding in autopsy of fish with the disorder is multiple petechial bleeding in the viscera and in the muscles. The blood vessels have smooth muscles that are dependent on Ca²⁺ and Mg²⁺ in order to contract normally. The lack of these ions, gives reduced ability for contraction, and in a condition with hypervolemia, it is likely that this can lead to blood vessels rupture and bleedings. In Rainbow trout in seawater, damage of the function of the pyloric sphincter (obstruction), could lead to imbalance in the osmoregulation, as the gut do not receive sufficient water from the stomach. This condition triggers the need for water, and in order to prevent drying out, it starts to drink seawater. It will drink in such quantities that it causes a disorder called "water belly". This is an abnormally enlarged stomach, filled with seawater. The disorder can get such a scope that the abdominal muscles tear, while the fish is still alive. This is an analog to HSS, where the salmon are drinking freshwater in order to acquire salts, to an extent that creates hypervolemia, which provides rupture of blood vessels, and extensive bleeding in various organs. A transudate (ascites) that one can find by HSS, apparently caused by the heart's reduced ability to pump on the incoming blood, can be enhanced by the fish having a condition of hypervolemia.

The fish feed according to the present invention contains both Na⁺, Cl⁻, Ca²⁺, and Mg²⁺, and can be used in connection with smoltification, the period when HSS most often occurs. It is likely that the fish feed according to the present invention can be used to prevent and treat the condition HSS in salmonids. By feeding of the fish feed according to the present invention, the fish do not have the need to drink fresh water in order to replace these ions mentioned here, and thus hypervolemia does not appear, bleeding, ascites, muscle weakness or shells edema, and avoid HSS as a production problem. This will apply also in the production of large salmon in fresh water (right up to harvest size) where loss of appetite, HSS, shells edema and shells loss as regular production disorders.

### Differences between the SuperSmolt method and the fish feed according to the present invention

According to the SuperSmolt ® method, cation modulators Ca²⁺, Mg²⁺ are added to the operating water, in combination with Na⁺, Cl⁻ and free tryptophan in the fish feed for the salmonids. The purpose of the SuperSmolt ® method is to transfer the salmon fish to seawater.

In contrast to the SuperSmolt ® method, the fish feed according to the present invention has all of the cation modulators in the feed itself, and a does not require separately adding modulators to the operating water of the fish. The purpose of the fish feed and the method of the present invention is to transfer the salmon fish to the seawater, but also to keep the fish in the smolt window in order to produce large salmonids in freshwater for a long period, and at the same time control the disorder HSS and desmoltification. The fish feed, the method of smoltification and the areas of application are thus new in relation to the SuperSmolt ® method.

Further, we see that by the use of only the modulators Na⁺, Cl⁻ and tryptophan in the feed (as is the case with the feed according to the SuperSmolt ® method), outbreaks of the disorder HSS in Atlantic salmon increase. This highlights that the diet provided by the SuperSmolt ® feed is not sufficient to carry out a satisfactory smoltification process, without that method's addition of the modulators Ca²⁺, Mg²⁺ in fresh water.

### Area of applications for the fish feed according to the present invention

The fish feed according to the present invention can be used as:
1. Additional signal for smoltification in combination with traditional photo manipulation in salmonids.
2. Method for smoltification in combination with continuously light, natural light or incomplete photo manipulation in smoltification.
3. Synchronize smolt groups in freshwater..
4. Prevention of desmoltification in salmonids in freshwater.
5. Prophylaxis and treatment of HSS, scale edema and loss of scales.
6. Feed composition for the production of post smolt and harvest sized fish in fresh water, with various species of salmonids, with regard to the prevention of the occurrence of the diseases referred to in point 4 and 5 above, as well as maintain normal growth, similar to what seen in the sea water.
7. Feed composition for the production of brood stock in fresh water, with various species of salmonids, up to the size where it is desirable/possible to give it the sexual maturation signal and harvest fish eggs for consumption, or for further production of fish, and prevent the occurrence of the diseases referred to in point 4 and 5 above, as well as maintain normal growth, similar to what seen in the sea water.

## Claims

1. A fish feed comprising protein, fat, carbohydrates, vitamins, minerals and water, **CHARACTERIZED in that** the fish feed further comprises Na+ from 3.934-39.340 g/kg by weight, a polyvalent cation receptor modulator (PVCR) in the form of free amino acids from 1-10 g/kg by weight, Mg2+ from 0.026-25.530 g/kg by weight, and Ca2+ from 0.036-36.110 g/kg by weight.

2. The fish feed according to claim 1, **CHARACTERIZED in that** the free amino acids are selected from the group consisting of Tryptophan, Tyrosine, Phenylalanine, Serine, Alanine, Arginine, Histidine, Leucine, Isoleucine, Aspartic acid, Glutamic acid, Glycine, Lysine, Methionine, Proline, Glutamine, Asparagine, Threonine, Valine, Cysteine and any combination thereof.

3. The fish feed according to one of the preceding claims, **CHARACTERIZED in that** Na+, Mg+ and Ca2+ are provided as salts in the ranges of 10-100 g/kg, 0.1-100 g/kg and 0.1-100 g/kg respectively.

4. The fish feed according to claim 3, **CHARACTERIZED in that** the sodium salts are NaCl.

5. The fish feed according to claim 3, **CHARACTERIZED in that** the magnesium salts are MgCl2.

6. The fish feed according to claim 3, **CHARACTERIZED in that** the calcium salts are CaCl2.

7. The fish feed according to one of the preceding claims, **CHARACTERIZED in that** the fish feed comprises from 6.202-199.020 g/kg by weight CI-.

8. The fish feed according to one of the preceding claims, **CHARACTERIZED in that** it comprises 6% by weight NaCl, 0,75% by weight CaCl2, 0,25% by weight MgCl2, and 0,4% by weight L-tryptophan.

9. The fish feed according to one of the preceding claims, **CHARACTERIZED in that** the fish feed is suitable for inducing smoltification and/or the prevention of smoltification in Salmonidae.

10. The fish feed according to any one of claims 1 - 9, for use as a medicament.

11. The fish feed for use according to claim 10, wherein the use is in the prophylactic and/or therapeutic treatment of haemorrhagic smolt syndrome (HSS) in Salmonidae.

12. The fish feed for use according to either of claims 10 or 11, wherein the use is during a method of smoltification of Salmonidae, the method comprising administering the composition in the form of a feed to parr or desmoltified fish, in the absence of artificial winter signal photomanipulation.

13. The fish feed for use according to either of claims 10 or 11, wherein the use is during a method of preventing desmoltification in Salmonidae, the method comprising administering the composition in the form of a feed to a population of smoltified fish, in fresh water.
